# EUROPEAN PATENT APPLICATION

(11) **EP 4 664 645 A1**
(43) Date of publication of application: **17.12.2025**
(21) Application number: 23959128.2
(22) Date of filing: 21.11.2023
(51) Int. Cl.: H01M 50/342, H01M 50/30

(54) **BATTERY CELL, BATTERY, AND ELECTRICAL APPARATUS**

(71) Applicant: Contemporary Amperex Technology Co., Limited, Ningde, Fujian 352100 (CN)
(72) Inventor: LI, Chuan, Ningde, Fujian 352100 (CN); GUO, Zhijun, Ningde, Fujian 352100 (CN); YANG, Rui, Ningde, Fujian 352100 (CN); CHEN, Xinxiang, Ningde, Fujian 352100 (CN); HUANG, Shaobin, Ningde, Fujian 352100 (CN)
(74) Representative: Ran, Handong
(86) International application number: PCT/CN2023/133007
(87) International publication number: WO 2025/107153

(57) **Abstract**

A battery cell (200), a battery (400), and an electrical apparatus (500). The battery cell (200) comprises an electrode assembly (300), a positive electrode plate and a negative electrode plate forming a flat area (301); a housing (60) being used for accommodating the electrode assembly (300), and the housing (60) comprising a first wall portion (11) and two second wall portions (12), the two second wall portions (12) being respectively located on either side of the flat area (301); a pressure relief portion (40), the pressure relief portion (40) being arranged on the first wall portion (11), the pressure relief portion (40) comprising a weak portion (491) and a main body portion (492), the main body portion (492) being located between the weak portion (491) and the first wall portion (11); the maximum thickness of the first wall portion (11) is Dl, the minimum thickness of the main body portion (492) is D2, the maximum thickness of the weak portion (491) is D3, and D3 < D2 < D1.

## Description

### TECHNICAL FIELD

The present application relates to the field of batteries, and in particular, to a battery cell, a battery, and an electric device.

### BACKGROUND

In the related art, a battery cell includes a housing and an electrode assembly, the electrode assembly is disposed inside the housing, and the housing is provided with a pressure relief part. When the battery cell expands, the housing deforms, causing deformation of a housing wall provided with the pressure relief part, thereby subjecting the pressure relief part to a tensile force. This easily leads to damage to the pressure relief part, affecting the normal operation of the pressure relief part.

### SUMMARY

The present application aims to solve at least one of the technical problems existing in the prior art. To this end, one objective of the present application is to provide a battery cell. On the premise that the weak part can smoothly open when thermal runaway occurs in the battery cell, the body part can bear a part of the acting force from the first wall part, thereby reducing the risk of the weak part being fractured due to excessive pulling during normal use of the battery cell.

The present application further provides a battery.

The present application further provides an electric device.

In a first aspect, embodiments of the present application provide a battery cell. The battery cell includes:
an electrode assembly, including a positive electrode plate and a negative electrode plate, where the positive electrode plate and the negative electrode plate are stacked to form a flat region, and at least a part of the positive electrode plate and at least a part of the negative electrode plate are stacked in the flat region in a first direction;
a housing, configured to accommodate the electrode assembly, where the housing includes a first wall part and two second wall parts connected to the first wall part, and the two second wall parts are respectively located on two sides of the flat region in the first direction;
a pressure relief part, where the pressure relief part is disposed on the first wall part, the pressure relief part includes a weak part and a body part, and the body part is disposed between the weak part and the first wall part, a maximum thickness of the first wall part being D1, a minimum thickness of the body part being D2, and a maximum thickness of the weak part being D3, where D3 < D2 < D1.

In the above technical solution, by satisfying D3 < D2 < D1, when the electrode assembly inside the battery cell expands, causing deformation of the housing, and the force is transmitted from the first wall part to the body part, since the thickness of the body part is less than that of the first wall part, the body part can bear a part of the acting force from the first wall part, such that the tensile force acting on the weak part can be reduced, the deformation resistance of the weak part can be improved, the impact of external force or deformation on the pressure relief part is reduced, and the risk of the weak part being fractured due to excessive pulling during normal use of the battery cell is mitigated, thereby reducing the risk of damage to the pressure relief part, which is conducive to maintaining the normal operation of the pressure relief part.

In some embodiments, D1 - D2 > D2 - D3.

In the above technical solution, the difference value between the maximum thickness of the first wall part and the minimum thickness of the body part, and the difference value between the minimum thickness of the body part and the maximum thickness of the weak part gradually decrease, such that the buffer effect of the pressure relief part at a position more proximal to the weak part becomes stronger, the tensile force acting on the weak part can be further reduced, the deformation resistance of the weak part can be further improved, the impact of external force or deformation on the pressure relief part is further reduced, and the risk of the weak part being fractured due to excessive pulling during normal use of the battery cell is further mitigated, thereby further reducing the risk of damage to the pressure relief part, which is more conducive to maintaining the normal operation of the pressure relief part.

In some embodiments, D3 ≤ 0.2 × D1.

In the above technical solution, the difference value between the thickness of the first wall part and the thickness of the weak part can be made appropriate, thereby preventing the first wall part from being affected when the weak part ruptures.

In some embodiments, the body part includes a first body part and a second body part that are connected to each other, the first body part is connected to the first wall part, the second body part is connected between the weak part and the first body part, the first body part is arranged around the second body part, and the second body part is arranged around the weak part, a thickness of the first body part being D4, a thickness of the second body part being D2, where D2 < D4 < D1.

In the above technical solution, the buffer effect of the pressure relief part at a position more proximal to the weak part becomes stronger, the tensile force acting on the weak part can be further reduced, the deformation resistance of the weak part can be further improved, the impact of external force or deformation on the pressure relief part is further reduced, and the risk of the weak part being fractured due to excessive pulling during normal use of the battery cell is further mitigated, thereby further reducing the risk of damage to the pressure relief part, which is more conducive to maintaining the normal operation of the pressure relief part. Moreover, the second body part is arranged around the weak part, and the first body part is arranged around the second body part, such that the tensile force transmitted to the weak part in the circumferential direction of the weak part can be reduced, and the tensile force acting on the weak part is further reduced, thereby further improving the deformation resistance of the weak part.

In some embodiments, D1 - D4 > D4 - D2 > D2 - D3.

In the above technical solution, the buffer effect of the pressure relief part at a position more proximal to the weak part readily becomes stronger, the tensile force acting on the weak part can be further reduced, the deformation resistance of the weak part can be further improved, the impact of external force or deformation on the pressure relief part is further reduced, and the risk of the weak part being fractured due to excessive pulling during normal use of the battery cell is further mitigated, thereby further reducing the risk of damage to the pressure relief part, which is more conducive to maintaining the normal operation of the pressure relief part.

In some embodiments, a scored groove is formed in the pressure relief part, and a bottom of the scored groove is provided with the weak part;
the weak part includes a first weak segment and a second weak segment, a thickness of the second weak segment is less than a thickness of the first weak segment, the first weak segment is a straight line segment extending in a second direction, and the second direction is perpendicular to the first direction.

In the above technical solution, the thickness of the second weak segment is less than the thickness of the first weak segment, and the first weak segment extends in the second direction, such that the structural strength of the pressure relief part can be enhanced, the deformation resistance of the scored groove can be improved, and the impact of external force or deformation on the position of the scored groove of the pressure relief part is reduced. When the battery cell expands, causing deformation of the housing, the impact of the deformation of the housing on the pressure relief part can be reduced, thereby reducing the risk of damage to the pressure relief part, which is conducive to maintaining the normal operation of the pressure relief part.

In some embodiments, the pressure relief part is configured to initiate cracking at the second weak segment when an internal pressure or temperature of the housing reaches a threshold.

In the above technical solution, since the pressure relief part is configured to initiate cracking at the second weak segment, when the internal pressure or temperature of the housing reaches the threshold, under the action of the internal pressure of the housing, the bottom wall of the scored groove cracks preferentially at the second weak segment, thereby tearing the bottom wall of the scored groove. As a result, when thermal runaway occurs in the battery cell, cracking can occur from the second weak segment and the first weak segment, and during normal use of the battery cell, the reliability of the scored groove can be improved, and the risk of rupture of the scored groove can be reduced.

In some embodiments, the scored groove includes a first straight groove segment extending in the second direction, and a bottom of the first straight groove segment is provided with the first weak segment.

In the above technical solution, the bottom of the first straight groove segment is provided with the first weak segment, such that the deformation resistance of the first straight groove segment can be improved, and the impact of external force or deformation on the position of the first straight groove segment of the pressure relief part is reduced, thereby allowing the first weak segment to be disposed in an appropriate position.

In some embodiments, a length of the first weak segment is less than a length of the first straight groove segment.

In the above technical solution, the length of the first weak segment is less than that of the first straight groove segment, such that the thickness of a partial position of the bottom wall of the first straight groove segment can be increased. On the basis of improving the deformation resistance of the scored groove, when the pressure in the mounting cavity reaches a certain level, the scored groove can be smoothly torn open to achieve a pressure relief effect, thereby reducing the risk that the scored groove fails to open when the pressure in the mounting cavity reaches a certain level, and enhancing the use safety of the battery cell.

In some embodiments, a ratio of the length of the first weak segment to the length of the first straight groove segment is greater than or equal to 0.5 and less than or equal to 0.9.

In the above technical solution, since the ratio of the length of the first weak segment to the length of the first straight groove segment is greater than or equal to 0.5 and less than or equal to 0.9, the length proportion of the first weak segment formed in the first straight groove segment is appropriate. On the basis of better improving the deformation resistance of the scored groove, when the pressure in the mounting cavity reaches a certain level, the scored groove can be promptly and smoothly torn open to achieve a rapid pressure relief effect.

In some embodiments, in the second direction, the first weak segment is disposed at a middle position of the first straight groove segment.

In the above technical solution, by disposing the first weak segment at a middle position of the first straight groove segment, the structurally reinforced segment can be arranged at a position of the scored groove that is subjected to relatively large force, which is more conducive to improving the deformation resistance of the scored groove, thereby allowing the first weak segment to be arranged at an appropriate position.

In some embodiments, the first weak segment is symmetrical about a central cross section of the first straight groove segment, and the central cross section is perpendicular to the second direction.

In the above technical solution, since the first weak segment is symmetrical about the central cross section of the first straight groove segment, the first weak segment can be disposed at the central position of the first straight groove segment. After the pressure relief part is mounted on the first wall part, the first straight groove segment corresponds to the second wall part, such that the first weak segment can be arranged at a position of the scored groove that is subjected to relatively large force, allowing the first straight groove segment to be subjected to a uniform force, and the structural strength of the scored groove is further enhanced, which is more conducive to improving the deformation resistance of the scored groove, thereby allowing the first weak segment to be arranged at an appropriate position.

In some embodiments, in a depth direction of the scored groove, a difference between a thickness of the second weak segment and a thickness of the first weak segment is greater than 0.05 mm and less than or equal to 0.45 mm.

In the above technical solution, since the difference between the thickness of the second weak segment and the thickness of the first weak segment is greater than 0.05 mm and less than or equal to 0.45 mm, the thickness of the first weak segment is appropriate, that is, the deformation resistance of the scored groove can be improved, and when the pressure in the mounting cavity reaches a certain level, the scored groove can also be smoothly torn open.

In some embodiments, the scored groove includes two first straight groove segments extending in the second direction, and a bottom of each of the first straight groove segments is provided with the first weak segment.

In the above technical solution, since the two first straight groove segments extend in the second direction, and the bottom wall of each first straight groove segment is provided with the first weak segment, when the electrode assembly expands, the electrode assembly presses against the second wall part to be outwardly stretched, causing deformation of the housing. When the second wall part deforms, the deformation of the second wall part pulls the first wall part, causing deformation of the first wall part. The middle position of the second wall part deforms most severely, such that the middle position of the first wall part is subjected to the maximum tensile force. When the pressure relief part is mounted on the first wall part, the two first straight groove segments extend in the second direction, the two first straight groove segments are arranged in the first direction, and the bottom of each first straight groove segment is provided with the first weak segment, such that the part of the scored groove provided with the first weak segment can be arranged corresponding to the second wall part, and when the first wall part deforms, the acting force can be applied to the part of the scored groove provided with the first weak segment, which is conducive to improving the deformation resistance of the scored groove.

In some embodiments, the two first weak segments include a first segment and a second segment, a thickness of the first segment is less than a thickness of the second segment, and the pressure relief part is configured such that when the internal pressure or temperature of the housing reaches the threshold, the first segment completely cracks and at least a part of the second segment does not crack.

In the above technical solution, since the thickness of the first segment is less than the thickness of the second segment, and the pressure relief part is configured such that when the internal pressure or temperature of the housing reaches the threshold, the first segment completely cracks and at least a part of the second segment does not crack, the battery cell can achieve a pressure relief effect while reducing the risk of the pressure relief part being ejected from the battery cell, thereby reducing personal safety risks caused by the pressure relief part being ejected from the battery cell.

In some embodiments, lengths of the two first weak segments are equal.

In the above technical solution, the lengths of the two first weak segments are equal, such that when the electrode assembly expands, the scored groove is subjected to a uniform force, the deformation resistance of the scored groove is further improved, and the risk of tearing at the scored groove position of the pressure relief part is further reduced, thereby further reducing the impact of housing deformation on the pressure relief part.

In some embodiments, the scored groove includes two first arc-shaped groove segments, two ends of each of the first straight groove segments are respectively connected to the two first arc-shaped groove segments to configure the scored groove as an annular shape, and a bottom of each of the first arc-shaped groove segments is provided with the second weak segment.

In the above technical solution, the scored groove is configured as an annular shape, and the bottom wall of the first arc-shaped groove segment is provided with the second weak segment, such that when the internal pressure or temperature of the housing reaches the threshold, the second weak segment of the bottom wall of the first arc-shaped groove segment cracks, which is conducive to the tearing of the scored groove for pressure relief. Therefore, the battery cell can achieve a pressure relief effect while reducing the risk of the pressure relief part being ejected from the battery cell, thereby reducing personal safety risks caused by the pressure relief part being ejected from the battery cell.

In some embodiments, the scored groove includes one first straight groove segment extending in the second direction, and a bottom of the first straight groove segment is provided with the first weak segment.

In the above technical solution, the scored groove includes one first straight groove segment, and the bottom of the first straight groove segment is provided with the first weak segment, such that the part of the scored groove provided with the first weak segment can be arranged corresponding to the second wall part, and when the first wall part deforms, the acting force can be applied to the part of the scored groove provided with the first weak segment, which is conducive to improving the deformation resistance of the scored groove.

In some embodiments, the scored groove includes one first straight groove segment and four second straight groove segments, two ends of the first straight groove segment are respectively connected to two second straight groove segments disposed at a preset included angle, and a bottom of each of the second straight groove segments is provided with the second weak segment; or
the scored groove includes one first straight groove segment and two third straight groove segments, two ends of the first straight groove segment are respectively connected to the third straight groove segments, the third straight groove segment is perpendicular to the first straight groove segment, and a bottom of each of the third straight groove segments is provided with the second weak segment.

In the above technical solution, the scored groove includes one first straight groove segment and four second straight groove segments, and the bottom wall of the third straight groove segment is provided with the second weak segment, such that double-Y-shaped scored grooves can be formed at two ends of the scored groove, and when the pressure in the mounting cavity reaches a certain level or the temperature reaches the threshold, the pressure inside the mounting cavity can be discharged from the double-Y-shaped scored grooves, thereby enabling rapid pressure relief of the battery cell. The scored groove includes one first straight groove segment and two third straight groove segments, such that the scored groove can be configured as an "I"-shaped structure. The bottom wall of the third straight groove segment is provided with the second weak segment. Therefore, when the pressure in the mounting cavity reaches a certain level or the temperature reaches the threshold, the first straight groove segment and the two third straight groove segments can be torn open, and the pressure inside the mounting cavity can be discharged from the first straight groove segment and the third straight groove segments, thereby increasing the pressure relief speed of the battery cell.

In some embodiments, in the second direction, a center of the pressure relief part and a center of the first wall part are offset.

In the above technical solution, since in the second direction, the center of the pressure relief part and the center of the first wall part are offset, the pressure relief part is arranged deviated from the center of the first wall part. Therefore, when the battery cell expands, causing deformation of the housing, the tensile force acting on the pressure relief part can be reduced, and thus the impact of the deformation of the housing on the scored groove of the pressure relief part is reduced, thereby reducing the risk of damage to the pressure relief part, which is conducive to maintaining the normal operation of the anti-explosion part.

In some embodiments, the pressure relief part and the first wall part are integrally formed; or
the pressure relief part is disposed separately from the first wall part, the first wall part is provided with a through hole, and the pressure relief part is mounted in the through hole.

In the above technical solution, since the pressure relief part and the first wall part are integrally formed, the pressure relief part is formed by a simple manner, the number of components constituting the battery cell can be reduced, the structure of the battery cell can be simplified, and the manufacturing cost of the battery cell can also be reduced. Additionally, by configuring the pressure relief part and the first wall part as separate components, it is convenient to arrange the pressure relief part on the housing with low manufacturing difficulty and high efficiency, thereby improving production efficiency of the battery cell.

In some embodiments, the housing includes a housing body and an end cover, at least one side of the housing body has an opening, the end cover is connected to the housing body and is configured to seal the opening, and the first wall part is formed on the housing body.

In the above technical solution, by forming the first wall part on the housing body, the structure of the end cover can be simplified, and the distance between the pressure relief part and the body part of the electrode assembly can be shortened, thereby shortening the path for the discharge medium to flow to the pressure relief part during pressure relief, reducing time for the discharge medium to reach the pressure relief part, improving the response speed of pressure relief of the battery cell, and thus effectively enhancing the reliability of the battery cell.

In some embodiments, two opposite sides of the housing body each have an opening, and two end covers are configured to seal the openings on the corresponding sides.

In the above technical solution, two opposite sides of the housing body each have an opening, and two end covers are configured to seal the openings on the corresponding sides, such that a mounting cavity can be jointly defined, and the manufacturing and formation of the housing body can be facilitated, and it is also convenient for tabs to be led out from both ends of the electrode assembly.

In some embodiments, the end cover is provided with an electrical connection part, the electrical connection part being electrically connected to the positive electrode plate, or the electrical connection part being electrically connected to the negative electrode plate.

In the above technical solution, the electrical connection part is electrically connected to the positive electrode plate, or the electrical connection part is electrically connected to the negative electrode plate, such that electrical energy of the battery cell can be input or output.

In some embodiments, the first wall part is configured to support the electrode assembly and is disposed below the electrode assembly.

In the above technical solution, the electrode assembly is supported by the first wall part, such that the electrode assembly can be firmly mounted in the mounting cavity of the housing.

In some embodiments, a material of the housing includes at least one of aluminum, nickel-plated carbon steel, stainless steel, a magnesium alloy, a nickel alloy, a copper alloy, and a zirconium alloy.

In the above technical solution, the material of the housing includes at least one of aluminum, nickel-plated carbon steel, stainless steel, a magnesium alloy, a nickel alloy, a copper alloy, and a zirconium alloy, such that the structural strength of the housing can be enhanced, and the manufacturing cost of the housing can also be reduced.

In a second aspect, the embodiments of the present application further provide a battery. The battery includes the above battery cell.

In a third aspect, the embodiments of the present application further provide an electric device. The electric device includes the above battery.

The additional aspects and the advantages of the present application will be partially provided in the following description, will partially become apparent from the following description, or will be learned through the practice of the present application.

### BRIEF DESCRIPTION OF THE DRAWINGS

FIG. 1 is a schematic diagram of an electric device according to an embodiment of the present application;
FIG. 2 is an exploded view of a battery according to an embodiment of the present application;
FIG. 3 is an exploded view of a battery cell according to a first embodiment of the present application;
FIG. 4 is a schematic diagram of a battery cell according to a second embodiment of the present application;
FIG. 5 is an enlarged view of part A in FIG. 4;
FIG. 6 is a schematic diagram of a battery cell according to a third embodiment of the present application;
FIG. 7 is an exploded view of a battery cell according to a second embodiment of the present application;
FIG. 8 is a schematic diagram of a first embodiment of a pressure relief part of a battery cell according to an embodiment of the present application;
FIG. 9 is a front view of a first embodiment of a pressure relief part of a battery cell according to an embodiment of the present application;
FIG. 10 is an enlarged view of part B-B in FIG. 9;
FIG. 11 is an enlarged view of part C in FIG. 10;
FIG. 12 is a schematic diagram of a second embodiment of a pressure relief part of a battery cell according to an embodiment of the present application;
FIG. 13 is a schematic diagram of a third embodiment of a pressure relief part of a battery cell according to an embodiment of the present application;
FIG. 14 is a schematic diagram of a battery cell according to a fourth embodiment of the present application; and
FIG. 15 is a schematic diagram of the assembly of a first wall part and a pressure relief part according to the present application.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "install", "connect", and "attach" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality of" used in the present application refers to no less than two (including two).

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery mentioned in the embodiments of the present application refers to a single physical module including one or a plurality of battery cells to provide higher voltage and capacity. When there are a plurality of battery cells, the plurality of battery cells are connected in series, in parallel, or in series-parallel by a busbar component.

In some embodiments, the battery may be a battery module, and when there are a plurality of battery cells, the plurality of battery cells are disposed and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossmember and a longitudinal member of the vehicle.

In some embodiments, the battery may be an energy storage device. The energy storage device includes an energy storage container, an electrical energy storage cabinet, and the like.

Battery technology advancement requires consideration of various design factors at the same time, such as energy density, cycle life, discharge capacity, charging and discharging rate, and other performance parameters. In addition, the safety performance of the battery also needs to be considered.

In the battery cell, in order to ensure the safety of the battery cell, a pressure relief part may be disposed on the housing of the battery cell. When the battery cell undergoes thermal runaway, the pressure inside the battery cell is relieved through the pressure relief part, so as to improve the safety of the battery cell.

During use of the battery cell in charging and discharging, the electrode assembly may undergo hard expansion, causing the housing to bulge and deform. The pressure relief part is disposed on the housing, and especially, some pressure relief parts are disposed on the wall part on the side proximal to the electrode assembly. The expansion of the electrode assembly may deform the wall part where the pressure relief part is located, such that the score of the pressure relief part is pulled, resulting in liquid leakage and the like caused by rupture at the score of the pressure relief part. As a result, the rupture may occur when the pressure inside the battery cell has not reached the rupture pressure of the pressure relief part, leading to failure of the pressure relief part and reduced reliability of the pressure relief part.

In view of this, the embodiments of the present application provide a battery cell, including an electrode assembly and a housing. The housing is configured to accommodate the electrode assembly, and the housing includes a first wall part and two second wall parts connected to the first wall part. A pressure relief part is disposed on the first wall part, the pressure relief part includes a weak part and a body part, and the body part is disposed between the weak part and the first wall part. The maximum thickness of the first wall part is D1, the minimum thickness of the body part is D2, and the maximum thickness of the weak part is D3, where D3 < D2 < D1.

In such a battery cell, by satisfying D3 < D2 < D1, when thermal runaway occurs in the battery cell, on the premise that the weak part can smoothly open, the body part can bear a part of the acting force from the first wall part, such that the tensile force acting on the weak part can be reduced, the deformation resistance of the weak part can be improved, the impact of external force or deformation on the pressure relief part is reduced, and the risk of the weak part being fractured due to excessive pulling during normal use of the battery cell is mitigated, thereby reducing the risk of damage to the pressure relief part, which is conducive to maintaining the normal operation of the pressure relief part.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

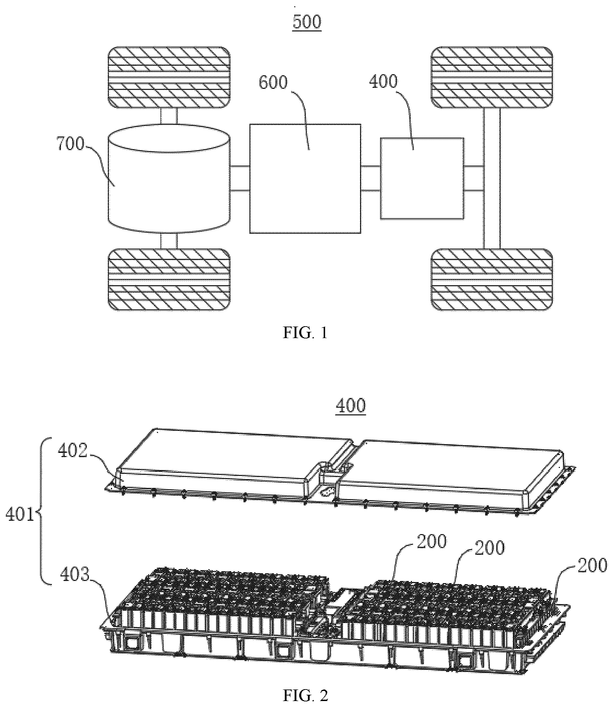

Referring to FIG. 1, FIG. 1 is a schematic diagram of a vehicle according to some embodiments of the present application. A battery 400 is arranged inside the vehicle, and the battery 400 may be arranged at the bottom, head, or tail of the vehicle. The battery 400 may be configured to supply power to the vehicle. For example, the battery 400 may serve as an operation power source for the vehicle.

The vehicle may further include a controller 600 and a motor 700. The controller 600 is configured to control the battery 400 to supply power to the motor 700, e.g., for operation power needed by the vehicle for start-up, navigation, and driving.

In some embodiments of the present application, the battery 400 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of a battery 400 according to some embodiments of the present application. The battery 400 includes battery cells 200 and a case 401, and the case 401 is configured to accommodate the battery cells 200.

The case 401 is a component for accommodating the battery cells 200, the case 401 provides a placement space for the battery cells 200, and the case 401 may be of a variety of structures. In some embodiments, the case 401 may include a first case body 402 and a second case body 403. The first case body 402 and the second case body 403 are mutually lidded with each other to define a placement space for accommodating the battery cells 200. The first case body 402 and the second case body 403 may be in various shapes, such as a rectangular parallelepiped and a cylinder. The first case body 402 may be of a hollow structure with one side open, the second case body 403 may also be of a hollow structure with one side open, and the open side of the first case body 402 is lidded with the open side of the second case body 403 to form the case 401 having a placement space. Alternatively, the first case body 402 may be of a hollow structure with one side open, the second case body 403 may be of a plate-shaped structure, and the open side of the first case body 402 is lidded with the second case body 403 to form the case 401 having a placement space. As an example, the battery cell 200 may be a cylindrical battery cell, a prismatic battery cell, a soft-pack battery cell, or a battery cell 200 of other shapes. The prismatic battery cell includes a square-housing battery cell, a blade-shaped battery cell, and a multi-prismatic battery, and the multi-prismatic battery is, e.g., a hexagonal prismatic battery. This is not particularly limited in the present application.

In the battery 400, one or more battery cells 200 may be provided. If a plurality of battery cells 200 are provided, the plurality of battery cells 200 may be connected in series, in parallel, or in series-parallel. The series-parallel connection means that both series connection and parallel connection are present in the connection of the plurality of battery cells 200. Alternatively, the plurality of battery cells 200 may be first connected in series, in parallel, or in series-parallel to form battery modules, and then the plurality of battery modules are connected in series, in parallel, or in series-parallel to form a whole to be accommodated in the case 401. Alternatively, all the battery cells 200 may be directly connected in series, in parallel, or in series-parallel, and then the whole formed by all the battery cells 200 is accommodated in the case 401.

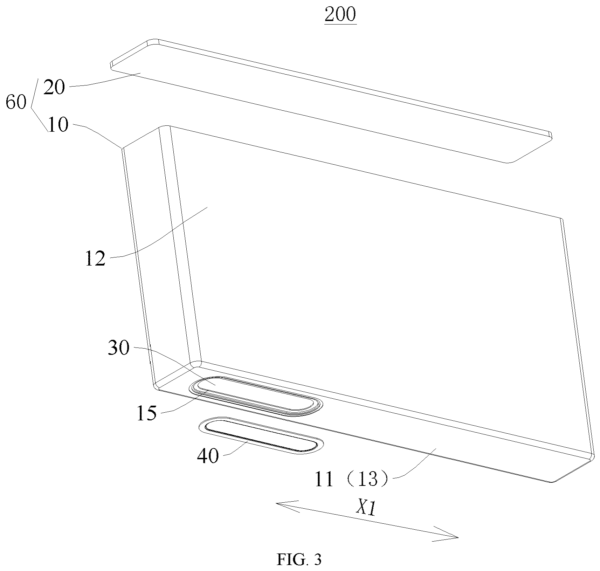

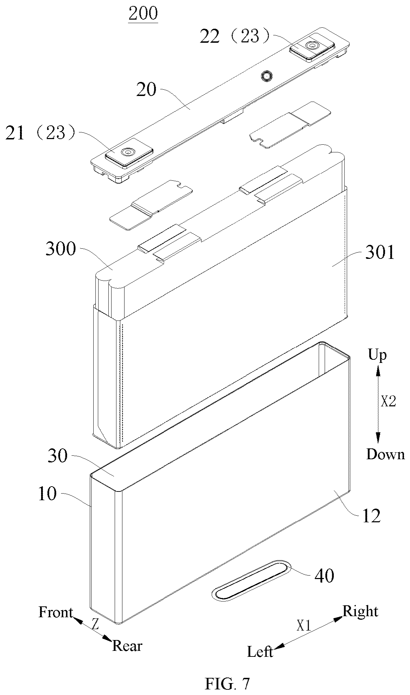

Referring to FIGs. 3 and 7, FIG. 3 is a schematic diagram of a battery cell 200 according to some embodiments of the present application, and FIG. 7 is an exploded view of a battery cell 200 according to some embodiments of the present application. The battery cell 200 may include a housing 60 and an electrode assembly 300.

The housing 60 is configured to accommodate components such as an electrode assembly 300 and an electrolyte. The housing 60 may be a steel housing, an aluminum housing, a plastic housing (such as polypropylene), a composite metal housing (such as a copper-aluminum composite housing), an aluminum-plastic film, or the like. As an example, the housing 60 may include a housing body 10 and an end cover 20.

The housing body 10 may be of a hollow structure with an opening formed at one end, or the housing body 10 may be of a hollow structure with openings formed at two opposite ends. The housing body 10 may be made of various materials, such as copper, iron, aluminum, steel, and an aluminum alloy.

The end cover 20 is a component that seals the opening of the housing body 10 to isolate the internal environment of the battery cell 200 from the external environment. The end cover 20 and the housing body 10 jointly define an accommodating space for accommodating the electrode assembly 300, the electrolytic solution, and other components. The end cover 20 may be connected to the housing body 10 by welding or winding, to seal the opening of the housing body 10. The shape of the end cover 20 may be adapted to the shape of the housing 60. For example, the housing body 10 is of a rectangular parallelepiped structure, and the end cover 20 is of a rectangular plate-shaped structure adapted to the housing body 10. The end cover 20 may also be made of various materials, such as copper, iron, aluminum, steel, and an aluminum alloy.

In the battery cell 200, one or two end covers 20 may be provided. In an embodiment in which the housing body 10 is of a hollow structure with openings formed at two ends, two end covers 20 may be correspondingly provided. The two end covers 20 respectively seal the two openings of the housing body 10, and the two end covers 20 and the housing body 10 jointly define the accommodating space. In an embodiment in which the housing body 10 is of a hollow structure with an opening formed at one end, one end cover 20 may be correspondingly provided. The end cover 20 seals the opening at one end of the housing body 10, and the one end cover 20 and the housing body 10 jointly define the accommodating space.

The electrode assembly 300 includes a positive electrode, a negative electrode, and a separator. During the charging and discharging process of the battery cell 200, active ions (such as lithium ions) are intercalated and deintercalated back and forth between the positive electrode and the negative electrode. The separator is disposed between the positive electrode and the negative electrode to prevent the positive and negative electrodes from short-circuiting while allowing the passage of active ions.

In some embodiments, the positive electrode may be a positive electrode plate, the positive electrode plate may include a positive electrode current collector and a positive electrode active substance zone disposed on at least one surface of the positive electrode current collector, and the positive electrode active substance zone has a positive electrode active material.

As an example, the positive electrode current collector has two surfaces opposite to each other in its own thickness direction, and the positive electrode active substance zone is disposed on any one or both of the two opposite surfaces of the positive electrode current collector.

In some embodiments, the negative electrode may be a negative electrode plate, and the negative electrode plate may include a negative electrode current collector and a negative electrode active substance zone disposed on at least one surface of the negative electrode current collector.

As an example, the negative electrode current collector has two surfaces opposite to each other in its own thickness direction, and the negative electrode active substance zone is disposed on any one or both of the two opposite surfaces of the negative electrode current collector.

In some embodiments, the material of the positive electrode current collector may be aluminum, and the material of the negative electrode current collector may be copper.

In some embodiments, the electrode assembly 300 further includes a separator disposed between the positive electrode and the negative electrode.

In some embodiments, the separator is a separation film. The present application does not particularly limit the type of the separation film, and any porous-structure separation film known to have good chemical stability and mechanical stability may be selected and used.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell 200 further includes an electrolyte that serves to conduct ions between the positive electrode and the negative electrode. The present application has no specific restrictions on the type of the electrolyte, which can be selected according to needs. The electrolyte may be liquid, gel, or solid.

In some embodiments, the electrode assembly 300 is of a wound structure. The positive electrode plate and the negative electrode plate are wound to form a wound structure.

In some embodiments, the electrode assembly 300 is of a stacked structure.

As an example, a plurality of positive electrode plates and a plurality of negative electrode plates may be provided respectively, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided, and each separator is disposed between any adjacent positive electrode plates or negative electrode plates separately.

As an example, the separators may be disposed continuously between any adjacent positive electrode plates or negative electrode plates by folding or winding.

In some embodiments, the shape of the electrode assembly 300 may be flat, multi-prismatic, or the like.

In some embodiments, the electrode assembly 300 is provided with tabs that can conduct current out from the electrode assembly 300. The tab includes a positive electrode tab and a negative electrode tab.

The battery cell 200 may further include an electrical connection part 23. The electrical connection part 23 may be disposed on the housing 60, and the electrical connection part 23 is configured to be electrically connected with the tab of the electrode assembly 300 to output the electrical energy of the battery cell 200. The electrical connection part 23 may be directly connected to the tab. For example, the electrical connection part 23 is directly welded to the tab. Alternatively, the electrical connection part 23 may be indirectly connected to the tab. For example, the electrical connection part 23 is indirectly connected to the tab via a current collecting member. The current collecting member may be a metal conductor, such as copper, iron, aluminum, steel, or an aluminum alloy.

As shown in FIGs. 3 and 7, taking an example in which the housing body 10 is of a hollow structure with an opening formed at one end, two electrical connection parts 23 may be disposed on the end cover 20. The two electrical connection parts 23 are a positive electrical connection part 21 (i.e., a positive electrode post terminal 21) and a negative electrical connection part 22 (i.e., a negative electrode post terminal 22) respectively. The positive electrical connection part 21 is electrically connected to the positive electrode tab, and the negative electrical connection part 22 is electrically connected to the negative electrode tab.

The electrode assembly 300 includes a plurality of electrode plates disposed in a wound manner, and an outer peripheral surface of the electrode assembly 300 includes a flat region 301.

A plurality of electrode plates are wound, that is, the positive electrode plate and the negative electrode plate are stacked and then wound around a set axis, to form the electrode assembly 300. The flat region 301 refers to a part of the electrode plate that extends along a plane when being wound. Two opposite side surfaces of the electrode assembly 300 in the first direction are formed as the flat regions 301.

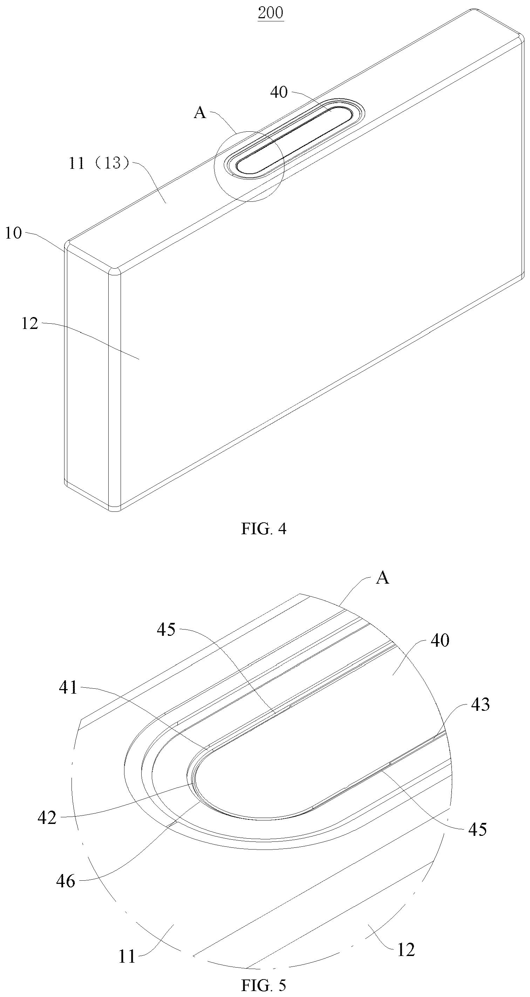

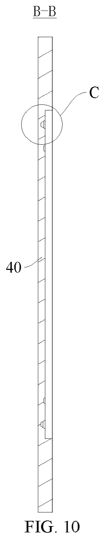

The battery cell 200 according to the embodiments of the present application is described below with reference to FIGs. 3 to 15.

The battery cell 200 according to the embodiments of the present application includes: an electrode assembly 300 including a positive electrode plate and a negative electrode plate, where the positive electrode plate and the negative electrode plate are stacked to form a flat region 301, and at least a part of the positive electrode plate and at least a part of the negative electrode plate are stacked in the flat region 301 in a first direction; a housing 60, configured to accommodate the electrode assembly 300, where the housing 60 includes a first wall part 11 and two second wall parts 12 connected to the first wall part 11, and the two second wall parts 12 are respectively located on two sides of the flat region 301 in the first direction; and a pressure relief part 40, where the pressure relief part 40 is disposed on the first wall part 11, the pressure relief part 40 includes a weak part 491 and a body part 492, the body part 492 is disposed between the weak part 491 and the first wall part 11, the maximum thickness of the first wall part 11 is D1, the minimum thickness of the body part 492 is D2, and the maximum thickness of the weak part 491 is D3, where D3 < D2 < D1.

The electrode assembly 300 includes a positive electrode plate and a negative electrode plate. For example, the electrode assembly 300 includes at least one positive electrode plate and at least one negative electrode plate, and the at least one positive electrode plate and the at least one negative electrode plate are stacked to form the electrode assembly 300. The positive electrode plate and the negative electrode plate are stacked to form a flat region 301. In the flat region 301, at least a part of the positive electrode plate and at least a part of the negative electrode plate are stacked in the first direction, such that the expansion of the electrode assembly 300 is mainly exhibited in the first direction. When the battery cell 200 is placed in the direction shown in FIG. 7, the first direction refers to the Z direction in FIG. 7. The outer peripheral surface of the electrode assembly 300 is provided with the flat region 301.

The electrode assembly 300 may also be of a wound type. The positive electrode plate and the negative electrode plate of the electrode assembly 300 are stacked with the separation film and then wound, and the flat region 301 is formed. In the flat region 301, a part of the positive electrode plate 21 and a part of the negative electrode plate 22 are stacked in the first direction. For example, after the winding, each layer of the positive electrode plate and each layer of the negative electrode plate can be penetrated by a shaft extending in the first direction, such that the expansion of the electrode assembly 300 is mainly exhibited in the first direction.

The housing 60 defines a mounting cavity 30, and the electrode assembly 300 of the battery cell 200 is mounted in the mounting cavity 30. The housing 60 includes the first wall part 11 and two second wall parts 12. The two second wall parts 12 are respectively located on two sides of the electrode assembly 300 in the first direction, and the expansion of the electrode assembly 300 mainly acts on the second wall parts 12. The first wall part 11 is disposed between the two second wall parts 12.

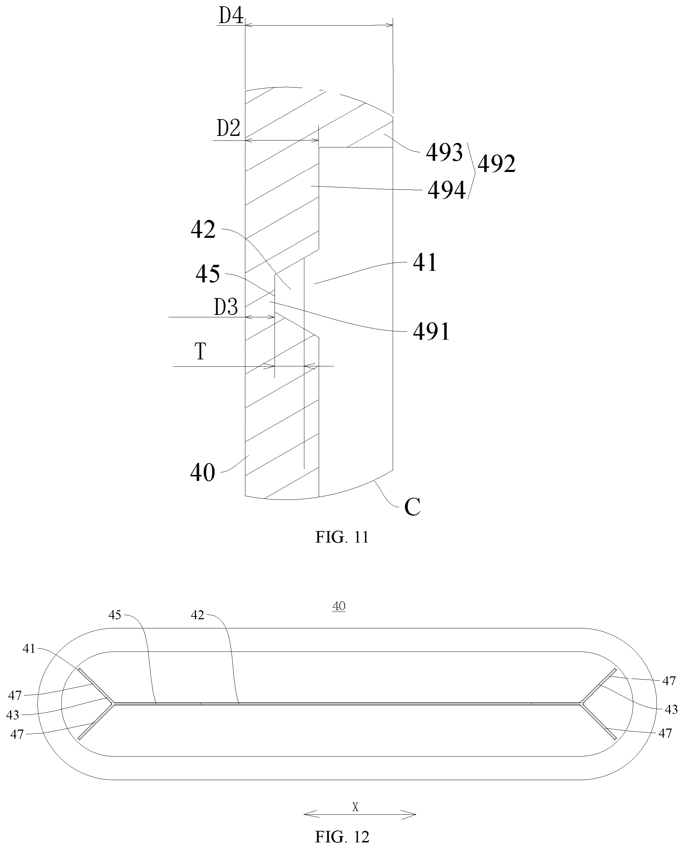

The pressure relief part 40 is disposed on the first wall part 11, and the pressure relief part 40 may be an anti-explosion valve, or the first wall part 11 has a score structure to form the pressure relief part 40 on the first wall part 11. As shown in FIG. 11, the pressure relief part 40 includes a weak part 491 and a body part 492. The body part 492 is connected between the weak part 491 and the first wall part 11. The maximum thickness of the first wall part 11 is D1 mm, the minimum thickness of the body part 492 is D2 mm, and the maximum thickness of the weak part 491 is D3 mm, where D3 < D2 < D1.

When the internal pressure threshold of the mounting cavity 30 reaches a certain level, for example, when thermal runaway occurs in the battery cell, the weak part 491 of the pressure relief part 40 is opened, and the gas and substance inside the battery cell 200 are discharged from the pressure relief part 40 to achieve a pressure relief effect. The pressure threshold design varies depending on design requirements, and the pressure threshold may depend on the material of one or more of the positive electrode plate, the negative electrode plate, the electrolytic solution, and the separation film in the battery cell 200.

When the electrode assembly 300 expands, the first wall part 11 is less affected by the electrode assembly 300 than the second wall part 12. Since the pressure relief part 40 is disposed on the first wall part 11, the risk of the pressure relief part 40 being obstructed or damaged due to the expansion of the electrode assembly 300 can be reduced.

When the electrode assembly expands, the electrode assembly presses against the housing of the battery cell to push the housing outward, causing deformation of the housing. The housing is the main force-bearing surface and deforms greatly. When the housing deforms, the deformation of the housing pulls the pressure relief part, thereby subjecting the pressure relief part to a tensile force. This easily leads to damage of the pressure relief part, affecting the normal operation of the pressure relief part.

In the present application, by satisfying D3 < D2 < D1, when the electrode assembly 300 inside the battery cell 200 expands, causing deformation of the housing 60, and the force is transmitted from the first wall part 11 to the body part 492, since the minimum thickness of the body part 492 is less than the maximum thickness of the first wall part 11, and the maximum thickness of the weak part 491 is less than the minimum thickness of the body part 492, enabling the pressure relief part 40 to provide a buffering effect, the body part 492 can bear a part of the acting force from the first wall part 11, such that the tensile force acting on the weak part 491 can be reduced, the deformation resistance of the weak part 491 can be improved, the impact of external force or deformation on the pressure relief part 40 is reduced, and the risk of the weak part 491 being fractured due to excessive pulling during normal use of the battery cell 200 is mitigated, thereby reducing the risk of damage to the pressure relief part 40, which is conducive to maintaining the normal operation of the pressure relief part 40.

In the above technical solution, by satisfying D3 < D2 < D1, when the electrode assembly 300 inside the battery cell 200 expands, causing deformation of the housing 60, and the force is transmitted from the first wall part 11 to the body part 492, since the thickness of the body part 492 is less than that of the first wall part 11, the body part 492 can bear a part of the acting force from the first wall part 11, such that the tensile force acting on the weak part 491 can be reduced, the deformation resistance of the weak part 491 can be improved, the impact of external force or deformation on the pressure relief part 40 is reduced, and the risk of the weak part 491 being fractured due to excessive pulling during normal use of the battery cell 200 is mitigated, thereby reducing the risk of damage to the pressure relief part 40, which is conducive to maintaining the normal operation of the pressure relief part 40.

According to some embodiments of the present application, D1 - D2 > D2 - D3.

By satisfying D1 mm - D2 mm > D2 mm - D3 mm, the difference value between the maximum thickness of the first wall part 11 and the minimum thickness of the body part 492, and the difference value between the minimum thickness of the body part 492 and the maximum thickness of the weak part 491 gradually decrease, such that the buffer effect of the pressure relief part 40 at a position more proximal to the weak part 491 becomes stronger, the tensile force acting on the weak part 491 can be further reduced, the deformation resistance of the weak part 491 can be further improved, the impact of external force or deformation on the pressure relief part 40 is further reduced, and the risk of the weak part 491 being fractured due to excessive pulling during normal use of the battery cell 200 is further mitigated, thereby further reducing the risk of damage to the pressure relief part 40, which is more conducive to maintaining the normal operation of the pressure relief part 40.

According to some embodiments of the present application, D3 ≤ 0.2 × D1.

D3 ≤ 0.2 × D1, and for example, D3 is 0.2 D1 or 0.1 D1. Such an arrangement enables the difference value between the thickness of the first wall part 11 and the thickness of the weak part 491 to be appropriate, thereby preventing the first wall part 11 from being affected when the weak part 491 ruptures.

According to some embodiments of the present application, as shown in FIG. 11, the body part 492 includes a first body part 493 and a second body part 494 that are connected to each other, the first body part 493 is connected to the first wall part 11, the second body part 494 is connected between the weak part 491 and the first body part 493, the first body part 493 is arranged around the second body part 494, and the second body part 494 is arranged around the weak part 491. The thickness of the first body part 493 is D4, and the thickness of the second body part 494 is D2, where D2 < D4 < D1.

D3 < D2 < D4 < D1, the first body part 493 and the second body part 494 may be both of an annular structure, the second body part 494 is arranged around the weak part 491 along the circumferential edge of the weak part 491, and the first body part 493 is arranged around the second body part 494 along the circumferential edge of the second body part 494.

In the above technical solution, by satisfying D2 < D4 < D1, the buffer effect of the pressure relief part 40 at a position more proximal to the weak part 491 becomes stronger, the tensile force acting on the weak part 491 can be further reduced, the deformation resistance of the weak part 491 can be further improved, the impact of external force or deformation on the pressure relief part 40 is further reduced, and the risk of the weak part 491 being fractured due to excessive pulling during normal use of the battery cell 200 is further mitigated, thereby further reducing the risk of damage to the pressure relief part 40, which is more conducive to maintaining the normal operation of the pressure relief part 40. Moreover, the second body part 494 is arranged around the weak part 491, and the first body part 493 is arranged around the second body part 494, such that the tensile force transmitted to the weak part 491 in the circumferential direction of the weak part 491 can be reduced, and the tensile force acting on the weak part 491 is further reduced, thereby further improving the deformation resistance of the weak part 491.

According to some embodiments of the present application, D1 - D4 > D4 - D2 > D2 - D3.

By satisfying D1 - D4 > D4 - D2 > D2 - D3, the buffer effect of the pressure relief part 40 at a position more proximal to the weak part 491 readily becomes stronger, the tensile force acting on the weak part 491 can be further reduced, the deformation resistance of the weak part 491 can be further improved, the impact of external force or deformation on the pressure relief part 40 is further reduced, and the risk of the weak part 491 being fractured due to excessive pulling during normal use of the battery cell 200 is further mitigated, thereby further reducing the risk of damage to the pressure relief part 40, which is more conducive to maintaining the normal operation of the pressure relief part 40.

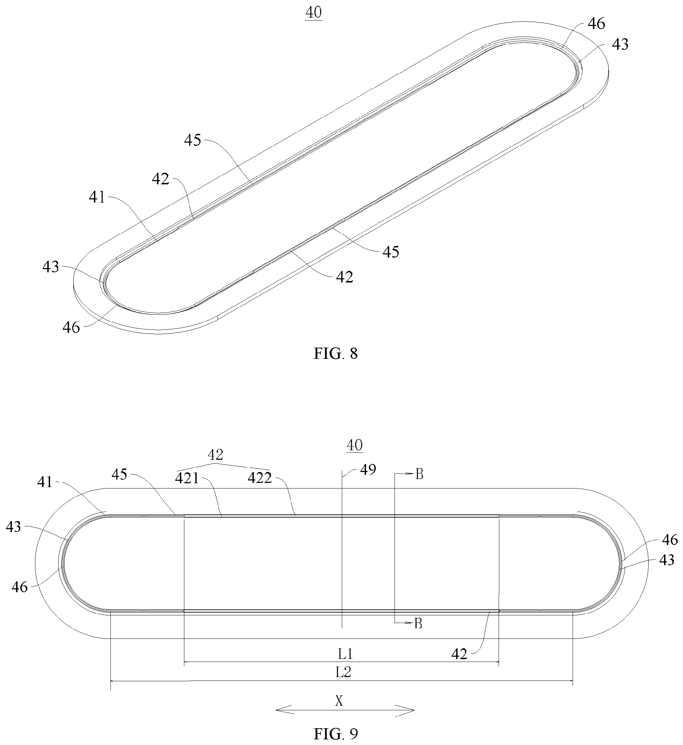

According to some embodiments of the present application, as shown in FIG. 9, a scored groove 41 is formed in the pressure relief part 40, and the bottom of the scored groove 41 is provided with the weak part 491. The weak part 491 includes a first weak segment 42 and a second weak segment 43, the thickness of the second weak segment 42 is less than the thickness of the first weak segment 43, the first weak segment 42 is a straight line segment extending in a second direction, and the second direction is perpendicular to the first direction. The scored groove 41 is formed in the pressure relief part 40, and when the internal pressure threshold of the mounting cavity 30 reaches a certain level, the scored groove 41 of the pressure relief part 40 is opened, and the gas and substance inside the battery cell 200 are discharged from the pressure relief part 40 to achieve a pressure relief effect. The pressure threshold design varies depending on design requirements, and the pressure threshold may depend on the material of one or more of the positive electrode plate, the negative electrode plate, the electrolytic solution, and the separation film in the battery cell 200.

The bottom of the scored groove 41 is provided with the weak part 491, and the weak part 491 includes a first weak segment 42 and a second weak segment 43. In other words, the bottom wall of the scored groove 41 is provided with the first weak segment 42 and the second weak segment 43. The thickness of the second weak segment 43 is less than the thickness of the first weak segment 42, the first weak segment 42 is a straight line segment extending in the second direction, and the second direction is perpendicular to the first direction. It should be noted that the first weak segment 42 may extend in or substantially in the second direction, and the second direction refers to the length direction of the first wall part 11.

In the present application, by making the thickness of the second weak segment 43 less than the thickness of the first weak segment 42, the thickness of a partial position of the bottom of the scored groove 41 can be increased compared to the prior art. Additionally, when the electrode assembly 300 expands, the flat region 301 of the electrode assembly 300 presses against the second wall part 12 to push the housing 60 outward, such that the housing 60 deforms, and the second wall part 12 of the housing 60 deforms greatly. When the second wall part 12 deforms, the deformation of the second wall part 12 pulls the first wall part 11 in the first direction, causing deformation of the first wall part 11. Since the first weak segment 42 extends in the second direction and the thickness of the first weak segment 42 is greater than the thickness of the second weak segment 43, the deformation resistance of the scored groove 41 can be improved, and the impact of external force or deformation on the scored groove 41 position of the pressure relief part 40 is reduced. When the electrode assembly 300 in the battery cell 200 expands, causing deformation of the housing 60, the risk of tearing at the scored groove 41 position of the pressure relief part 40 is reduced, and the impact of the deformation of the housing 60 on the pressure relief part 40 can be reduced, thereby reducing the risk of damage to the pressure relief part 40, which is conducive to maintaining the normal operation of the pressure relief part 40.

In the above technical solution, the thickness of the second weak segment 43 is less than the thickness of the first weak segment 42, and the first weak segment 42 extends in the second direction, such that the structural strength of the pressure relief part 40 can be enhanced, the deformation resistance of the scored groove 41 can be improved, and the impact of external force or deformation on the scored groove 41 position of the pressure relief part 40 is reduced. When the battery cell 200 expands, causing deformation of the housing 60, the impact of the deformation of the housing 60 on the pressure relief part 40 can be reduced, thereby reducing the risk of damage to the pressure relief part 40, which is conducive to maintaining the normal operation of the pressure relief part 40.

According to some embodiments of the present application, as shown in FIGs. 3, 4, and 6, the area of the first wall part 11 is less than the area of the second wall part 12.

The housing 60 has a first wall part 11 and a second wall part 12 adjacent to each other, and the area of the second wall part 12 is greater than the area of the first wall part 11. The second wall part 12 is the large-surface housing wall of the housing 60, and the first wall part 11 is the narrow-surface housing wall adjacent to the second wall part 12. After the electrode assembly 300 is mounted in the mounting cavity 30, the second wall part 12 is opposite to the flat region 301 of the electrode assembly 300. When the internal pressure of the mounting cavity 30 reaches a certain level, the scored groove 41 of the pressure relief part 40 is opened, and the gas and substance inside the battery cell 200 are discharged from the pressure relief part 40 to achieve a pressure relief effect.

When the electrode assembly 300 expands, the electrode assembly 300 presses against the second wall part 12 of the housing 60 of the battery cell 200 to push the housing 60 outward, causing deformation of the housing 60, the second wall part 12 of the housing 60 is the main force-bearing surface and deforms greatly, and the first wall part 11 bears less force than the second wall part 12. Therefore, by disposing the pressure relief part 40 on the first wall part 11, the pressure relief part 40 can be disposed on a surface subjected to less force of the housing 60. Compared to disposing the pressure relief part 40 on the second wall part 12, when the second wall part 12 of the housing 60 deforms, force on the pressure relief part 40 can be reduced, thereby further improving the deformation resistance of the scored groove 41, further reducing the impact of external force or deformation on the scored groove 41 position of the pressure relief part 40, and further allowing the pressure relief part 40 to be disposed in an appropriate position.

In the above technical solution, by disposing the pressure relief part 40 on the first wall part 11, the pressure relief part 40 can be disposed on a surface subjected to less force of the housing 60. Compared to disposing the pressure relief part 40 on the second wall part 12, when the second wall part 12 of the housing 60 deforms, force on the pressure relief part 40 can be reduced, thereby further improving the deformation resistance of the scored groove 41, further reducing the impact of external force or deformation on the scored groove 41 position of the pressure relief part 40, and further allowing the pressure relief part 40 to be disposed in an appropriate position.

According to some embodiments of the present application, the pressure relief part 40 is configured to initiate cracking at the second weak segment 43 when the internal pressure or temperature of the housing 60 reaches the threshold.

By making the thickness of the second weak segment 43 less than the thickness of the first weak segment 42, the thickness of the second weak segment 43 is made relatively thinner. When the internal pressure or temperature of the housing 60 reaches the threshold, under the action of the internal pressure of the housing 60, the bottom wall of the scored groove 41 cracks preferentially at the second weak segment 43, thereby tearing the bottom wall of the scored groove 41. As a result, when thermal runaway occurs in the battery cell 200, cracking can occur from the second weak segment 43 and the first weak segment 4, and during normal use of the battery cell 200, the reliability of the scored groove 41 can be improved, and the risk of rupture of the scored groove 41 can be reduced.

In the above technical solution, since the pressure relief part 40 is configured to initiate cracking at the second weak segment 43, when the internal pressure or temperature of the housing 60 reaches the threshold, under the action of the internal pressure of the housing 60, the bottom wall of the scored groove 41 cracks preferentially at the second weak segment 43, thereby tearing the bottom wall of the scored groove 41. As a result, when thermal runaway occurs in the battery cell 200, cracking can occur from the second weak segment 43 and the first weak segment 4, and during normal use of the battery cell 200, the reliability of the scored groove 41 can be improved, and the risk of rupture of the scored groove 41 can be reduced.

According to some embodiments of the present application, as shown in FIGs. 8, 12, and 13, the scored groove 41 may include a first straight groove segment 45 extending in the second direction, and the bottom of the first straight groove segment 45 is provided with the first weak segment 42.

The scored groove 41 has a first straight groove segment 45, the first straight groove segment 45 may be a straight-line groove segment, or the first straight groove segment 45 is similar to a straight-line groove segment. The first straight groove segment 45 extends in the second direction, the second direction may be parallel to the length direction of the pressure relief part 40, and the length direction of the pressure relief part 40 refers to the X direction in FIG. 8. The bottom wall of the first straight groove segment 45 is provided with the first weak segment 42, such that the first weak segment 42 is disposed at the bottom wall of the first straight groove segment 45.

It should be noted that when the electrode assembly 300 expands, the electrode assembly 300 presses against the second wall part 12 to push the housing 60 outward, such that the housing 60 deforms, and the second wall part 12 deforms greatly. When the second wall part 12 deforms, the deformation of the second wall part 12 pulls the first wall part 11 in the first direction, causing deformation of the first wall part 11. When the pressure relief part 40 is mounted on the first wall part 11, the first straight groove segment 45 is subjected to a relatively large force.

In the above technical solution, the bottom of the first straight groove segment 45 is provided with the first weak segment 42, such that the deformation resistance of the first straight groove segment 45 can be improved, and the impact of external force or deformation on the position of the first straight groove segment 45 of the pressure relief part 40 is reduced, thereby allowing the first weak segment 42 to be disposed in an appropriate position.

According to some embodiments of the present application, as shown in FIGs. 3 to 7, the first straight groove segment 45 is arranged opposite to the second wall part 12.

When the electrode assembly 300 expands, the electrode assembly 300 presses against the second wall part 12 of the housing 60 to push the housing 60 outward, such that the housing 60 deforms, and the second wall part 12 deforms greatly. When the second wall part 12 deforms, the deformation of the second wall part 12 pulls the first wall part 11, causing deformation of the first wall part 11. The middle position of the second wall part 12 deforms most severely, such that the middle position of the first wall part 11 is subjected to the maximum tensile force. When the pressure relief part 40 is mounted on the first wall part 11, the first straight groove segment 45 is arranged opposite to the second wall part 12, and the first straight groove segment 45 may be parallel to the second wall part 12, or the first straight groove segment 45 may be substantially parallel to the second wall part 12. By disposing the first straight groove segment 45 opposite to the second wall part 12, the part of the scored groove 41 provided with the first weak segment 42 can be arranged corresponding to the second wall part 12, and when the first wall part 11 deforms, the acting force can be applied to the part of the scored groove 41 provided with the first weak segment 42, which is conducive to improving the deformation resistance of the scored groove 41.

According to some embodiments of the present application, as shown in FIG. 9, the length of the first weak segment 42 is less than the length of the first straight groove segment 45.

The length of the first weak segment 42 is L1, and the length of the first straight groove segment 45 is L2, satisfying the relationship: L1 < L2. By making the length of the first weak segment 42 less than the length of the first straight groove segment 45, the thickness of a partial position of the bottom wall of the first straight groove segment 45 can be increased. On the basis of improving the deformation resistance of the scored groove 41, when the pressure in the mounting cavity 30 reaches a certain level, the scored groove 41 can be smoothly torn open to achieve a pressure relief effect, thereby reducing the risk that the scored groove 41 fails to open when the pressure in the mounting cavity 30 reaches a certain level, and enhancing the use safety of the battery cell 200.

In the above technical solution, the length of the first weak segment 42 is less than that of the first straight groove segment 45, such that the thickness of a partial position of the bottom wall of the first straight groove segment 45 can be increased. On the basis of improving the deformation resistance of the scored groove 41, when the pressure in the mounting cavity 30 reaches a certain level, the scored groove 41 can be smoothly torn open to achieve a pressure relief effect, thereby reducing the risk that the scored groove 41 fails to open when the pressure in the mounting cavity 30 reaches a certain level, and enhancing the use safety of the battery cell 200.

According to some embodiments of the present application, as shown in FIG. 9, the ratio of the length of the first weak segment 42 to the length of the first straight groove segment 45 is greater than or equal to 0.5 and less than or equal to 0.9.

The length of the first weak segment 42 is L1, and the length of the first straight groove segment 45 is L2, satisfying the relationship: 0.5 ≤ L1/L2 ≤ 0.9. For example, L1/L2 equals 0.5, 0.6, 0.8, 0.9, etc. Since the ratio of the length of the first weak segment 42 to the length of the first straight groove segment 45 is greater than or equal to 0.5 and less than or equal to 0.9, the length proportion of the first weak segment 42 formed in the first straight groove segment 45 is appropriate. On the basis of better improving the deformation resistance of the scored groove 41, when the pressure in the mounting cavity 30 reaches a certain level, the scored groove 41 can be promptly and smoothly torn open to achieve a rapid pressure relief effect.

In the above technical solution, since the ratio of the length of the first weak segment 42 to the length of the first straight groove segment 45 is greater than or equal to 0.5 and less than or equal to 0.9, the length proportion of the first weak segment 42 formed in the first straight groove segment 45 is appropriate. On the basis of better improving the deformation resistance of the scored groove 41, when the pressure in the mounting cavity 30 reaches a certain level, the scored groove 41 can be promptly and smoothly torn open to achieve a rapid pressure relief effect.

According to some embodiments of the present application, as shown in FIGs. 9, 12, and 13, in the second direction, the first weak segment 42 is disposed at a middle position of the first straight groove segment 45.

The second direction refers to the X direction in FIGs. 9, 12, and 13, in other words, along the length direction of the first straight groove segment 45. The first weak segment 42 is disposed at a middle position of the bottom wall of the first straight groove segment 45. After the pressure relief part 40 is mounted on the first wall part 11, the first straight groove segment 45 corresponds to the second wall part 12, and the middle position of the first straight groove segment 45 is subjected to large force and prone to tear. By disposing the first weak segment 42 at the middle position of the first straight groove segment 45, the first weak segment 42 can be arranged at a position of the scored groove 41 that is subjected to relatively large force, which is more conducive to improving the deformation resistance of the scored groove 41, thereby allowing the first weak segment 42 to be arranged at an appropriate position.

In the above technical solution, by disposing the first weak segment 42 at the middle position of the first straight groove segment 45, the structurally reinforced segment 50 can be arranged at a position of the scored groove 41 that is subjected to relatively large force, which is more conducive to improving the deformation resistance of the scored groove 41, thereby allowing the first weak segment 42 to be arranged at an appropriate position.

According to some embodiments of the present application, as shown in FIGs. 9, 12, and 13, the first weak segment 42 is symmetrical about a central cross section 49 of the first straight groove segment 45, and the central cross section 49 is perpendicular to the second direction.

In the second direction, the central cross section 49 is disposed at a middle position of the first straight groove segment 45, the central cross section 49 is perpendicular to the second direction, and the central cross section 49 is parallel to the first direction. Since the first weak segment 42 is symmetrical about the central cross section 49 of the first straight groove segment 45, the first weak segment 42 can be disposed at the central position of the first straight groove segment 45. After the pressure relief part 40 is mounted on the first wall part 11, the first straight groove segment 45 corresponds to the second wall part 12, such that the first weak segment 42 can be arranged at a position of the scored groove 41 that is subjected to relatively large force, allowing the first straight groove segment 45 to be subjected to a uniform force, and the structural strength of the scored groove 41 is further enhanced, which is more conducive to improving the deformation resistance of the scored groove 41, thereby allowing the first weak segment 42 to be arranged at an appropriate position.

In the above technical solution, since the first weak segment 42 is symmetrical about the central cross section 49 of the first straight groove segment 45, the first weak segment 42 can be disposed at the central position of the first straight groove segment 45. After the pressure relief part 40 is mounted on the first wall part 11, the first straight groove segment 45 corresponds to the second wall part 12, such that the first weak segment 42 can be arranged at a position of the scored groove 41 that is subjected to relatively large force, allowing the first straight groove segment 45 to be subjected to a uniform force, and the structural strength of the scored groove 41 is further enhanced, which is more conducive to improving the deformation resistance of the scored groove 41, thereby allowing the first weak segment 42 to be arranged at an appropriate position.

According to some embodiments of the present application, as shown in FIG. 11, in the depth direction of the scored groove 41, the difference between the thickness of the second weak segment 43 and the thickness of the first weak segment 42 is greater than 0.05 mm and less than or equal to 0.45 mm.

In the depth direction of the scored groove 41, the difference between the thickness of the first weak segment 42 and the thickness of the second weak segment 43 is T, satisfying the relationship: 0.05 mm < T ≤ 0.45 mm. For example, the difference between the thickness of the first weak segment 42 and the thickness of the second weak segment 43 is 0.05 mm, 0.2 mm, 0.3 mm, or 0.45 mm. Since the difference between the thickness of the second weak segment 43 and the thickness of the first weak segment 42 is greater than 0.05 mm and less than or equal to 0.45 mm, the thickness of the first weak segment 42 is appropriate, that is, the deformation resistance of the scored groove 41 can be improved, and when the pressure in the mounting cavity 30 reaches a certain level, the scored groove 41 can also be smoothly torn open.

In the above technical solution, since the difference between the thickness of the second weak segment 43 and the thickness of the first weak segment 42 is greater than 0.05 mm and less than or equal to 0.45 mm, the thickness of the first weak segment 4 is appropriate, that is, the deformation resistance of the scored groove 41 can be improved, and when the pressure in the mounting cavity 30 reaches a certain level, the scored groove 41 can also be smoothly torn open.

According to some embodiments of the present application, as shown in FIG. 9, the scored groove 41 includes two first straight groove segments 45 extending in the second direction, and the bottom of each of the first straight groove segments 45 is provided with the first weak segment 42.

The scored groove 41 may include two first straight groove segments 45, the two first straight groove segments 45 extend in the second direction, and the two first straight groove segments 45 are arranged in the first direction. For example, the two first straight groove segments 45 are spaced apart in the first direction, and the bottom wall of each of the first straight groove segments 45 is provided with the first weak segment 42.

In the above technical solution, since the two first straight groove segments 45 extend in the second direction, and the bottom wall of each first straight groove segment 45 is provided with the first weak segment 42, when the electrode assembly 300 expands, the electrode assembly 300 presses against the second wall part 12 to be outwardly stretched, causing deformation of the housing 60. When the second wall part 12 deforms, the deformation of the second wall part 12 pulls the first wall part 11, causing deformation of the first wall part 11. The middle position of the second wall part 12 deforms most severely, such that the middle position of the first wall part 11 is subjected to the maximum tensile force. When the pressure relief part 40 is mounted on the first wall part 11, the two first straight groove segments 45 extend in the second direction, the two first straight groove segments 45 are arranged in the first direction, and the bottom of each first straight groove segment 45 is provided with the first weak segment 42, such that the part of the scored groove 41 provided with the first weak segment 42 can be arranged corresponding to the second wall part 12, and when the first wall part 11 deforms, the acting force can be applied to the part of the scored groove 41 provided with the first weak segment 42, which is conducive to improving the deformation resistance of the scored groove 41.

According to some embodiments of the present application, as shown in FIG. 9, the two first weak segments 42 include a first segment 421 and a second segment 422. The thickness of the first segment 421 is less than the thickness of the second segment 422. The pressure relief part 40 is configured such that when the internal pressure or temperature of the housing 60 reaches the threshold, the first segment 421 completely cracks and at least a part of the second segment 422 does not crack.

The scored groove 41 includes two first straight groove segments 45, the bottom of each first straight groove segment 45 is provided with one first weak segment 42, and the two first straight groove segments 45 jointly form two first weak segments 42. Each of the first weak segments 42 may include a first segment 421 and a second segment 422, and the thickness of the first segment 421 is less than the thickness of the second segment 422. The pressure relief part 40 is configured such that when the internal pressure or temperature of the housing 60 reaches the threshold, the first segment 421 completely cracks, and at least a part of the second segment 422 does not crack. Such an arrangement enables the battery cell 200 to achieve a pressure relief effect while reducing the risk of the pressure relief part 40 being ejected from the battery cell 200, thereby reducing personal safety risks caused by the pressure relief part 40 being ejected from the battery cell 200.

In the above technical solution, since the thickness of the first segment 421 is less than the thickness of the second segment 422, and the pressure relief part 40 is configured such that when the internal pressure or temperature of the housing 60 reaches the threshold, the first segment 421 completely cracks and at least a part of the second segment 422 does not crack, the battery cell 200 can achieve a pressure relief effect while reducing the risk of the pressure relief part 40 being ejected from the battery cell 200, thereby reducing personal safety risks caused by the pressure relief part 40 being ejected from the battery cell 200.

According to some embodiments of the present application, as shown in FIG. 9, the lengths of the two first weak segments 42 are equal.

The scored groove 41 includes two first straight groove segments 45, and the bottom of each first straight groove segment 45 is provided with one first weak segment 42. The two first straight groove segments 45 jointly form two first weak segments 42, and the lengths of the two first weak segments 42 are equal. When the electrode assembly 300 expands, such an arrangement enables that the scored groove 41 is subjected to a uniform force, the deformation resistance of the scored groove 41 is further improved, and the risk of tearing at the scored groove 41 position of the pressure relief part 40 is further reduced, thereby further reducing the impact of housing 60 deformation on the pressure relief part 40.

In the above technical solution, the lengths of the two first weak segments 42 are equal, such that when the electrode assembly 300 expands, the scored groove 41 is subjected to a uniform force, the deformation resistance of the scored groove 41 is further improved, and the risk of tearing at the scored groove 41 position of the pressure relief part 40 is further reduced, thereby further reducing the impact of housing 60 deformation on the pressure relief part 40.

According to some embodiments of the present application, as shown in FIG. 9, the scored groove 41 includes two first arc-shaped groove segments 46, two ends of each of the first straight groove segments 45 are respectively connected to the two first arc-shaped groove segments 46 to configure the scored groove 41 as an annular shape, and the bottom of each of the first arc-shaped groove segments 46 is provided with the second weak segment 43.

As shown in FIG. 9, the scored groove 41 includes two first straight groove segments 45 and two first arc-shaped groove segments 46, and the first arc-shaped groove segments 46 may be circular arc-shaped. The two first arc-shaped groove segments 46 are disposed opposite to and spaced apart from each other in the second direction, and the two first straight groove segments 45 are disposed opposite to and spaced apart from each other in the first direction. The two first straight groove segments 45 are parallel, and two ends of each first straight groove segment 45 are respectively connected to the two first arc-shaped groove segments 46. The two first straight groove segments 45 and the two first arc-shaped groove segments 46 form a closed annular structure, such that the scored groove 41 is configured as an annular shape. Additionally, the bottom wall of the first arc-shaped groove segment 46 is provided with the second weak segment 43. When the internal pressure or temperature of the housing 60 reaches the threshold, the second weak segment 43 of the bottom wall of the first arc-shaped groove segment 46 cracks, which is conducive to the tearing of the scored groove 41 for pressure relief. Therefore, the battery cell 200 can achieve a pressure relief effect while reducing the risk of the pressure relief part 40 being ejected from the battery cell 200, thereby reducing personal safety risks caused by the pressure relief part 40 being ejected from the battery cell 200.

In the above technical solution, the scored groove 41 is configured as an annular shape, and the bottom wall of the first arc-shaped groove segment 46 is provided with the second weak segment 43, such that when the internal pressure or temperature of the housing 60 reaches the threshold, the second weak segment 43 of the bottom wall of the first arc-shaped groove segment 46 cracks, which is conducive to the tearing of the scored groove 41 for pressure relief. Therefore, the battery cell 200 can achieve a pressure relief effect while reducing the risk of the pressure relief part 40 being ejected from the battery cell 200, thereby reducing personal safety risks caused by the pressure relief part 40 being ejected from the battery cell 200.

According to some embodiments of the present application, as shown in FIG. 12, the scored groove 41 includes one first straight groove segment 45 extending in the second direction, and the bottom of the first straight groove segment 45 is provided with the first weak segment 42.

In the embodiments, the scored groove 41 includes one first straight groove segment 45, and the bottom wall of the first straight groove segment 45 is provided with the first weak segment 42. Since the bottom wall of the first straight groove segment 45 is provided with the first weak segment 42, when the electrode assembly 300 expands, the electrode assembly 300 presses against the second wall part 12 to be outwardly stretched, causing deformation of the housing 60. When the second wall part 12 deforms, the deformation of the second wall part 12 pulls the first wall part 11, causing deformation of the first wall part 11. The middle position of the second wall part 12 deforms most severely, such that the middle position of the first wall part 11 is subjected to the maximum tensile force. When the pressure relief part 40 is mounted on the first wall part 11, the first straight groove segment 45 extends in the second direction, such that the part of the scored groove 41 provided with the first weak segment 42 can be arranged corresponding to the second wall part 12, and when the first wall part 11 deforms, the acting force can be applied to the part of the scored groove 41 provided with the first weak segment 42, which is conducive to improving the deformation resistance of the scored groove 41.

In the above technical solution, the scored groove 41 includes one first straight groove segment 45, and the bottom of the first straight groove segment 45 is provided with the first weak segment 42, such that the part of the scored groove 41 provided with the first weak segment 42 can be arranged corresponding to the second wall part 12, and when the first wall part 11 deforms, the acting force can be applied to the part of the scored groove 41 provided with the first weak segment 42, which is conducive to improving the deformation resistance of the scored groove 41.

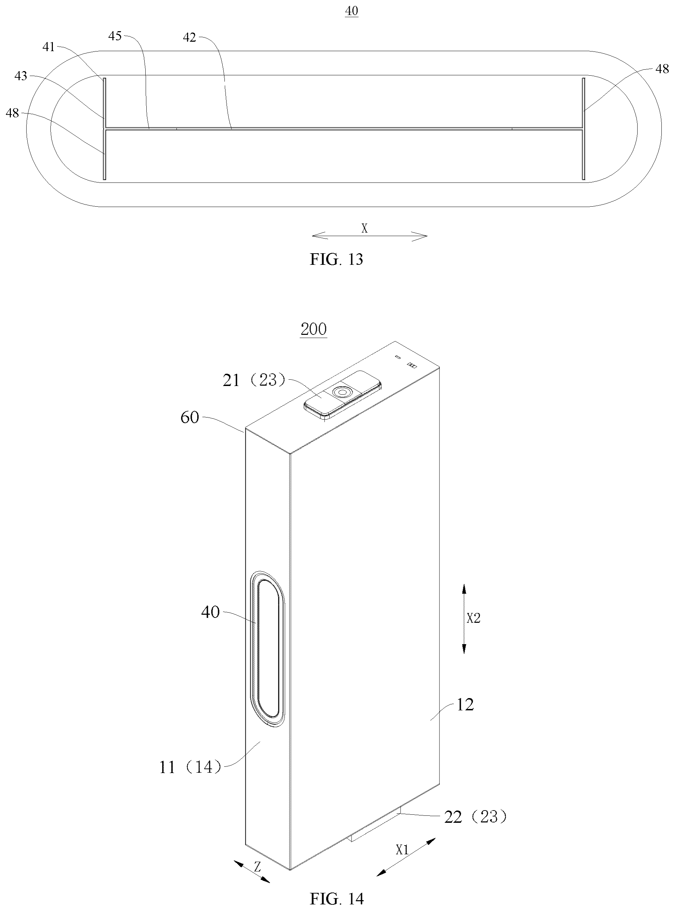

According to some embodiments of the present application, as shown in FIGs. 12 and 13, the scored groove 41 includes one first straight groove segment 45 and four second straight groove segments 47, two ends of the first straight groove segment 45 are respectively connected to two second straight groove segments 47 disposed at a preset included angle, and the bottom of each of the second straight groove segments 47 is provided with the second weak segment 43. Alternatively,

the scored groove 41 includes one first straight groove segment 45 and two third straight groove segments 48, two ends of the first straight groove segment 45 are respectively connected to the third straight groove segments 48, the third straight groove segment 48 is perpendicular to the first straight groove segment 45, and the bottom of each of the third straight groove segments 48 is provided with the second weak segment 43.

As shown in FIG. 12, the scored groove 41 includes one first straight groove segment 45 and four second straight groove segments 47, two ends of the first straight groove segment 45 are respectively connected to two second straight groove segments 47 disposed at a preset included angle, and the bottom wall of the third straight groove segment 48 is provided with the second weak segment 43, such that double-Y-shaped scored grooves 41 can be formed at two ends of the scored groove 41, and when the pressure in the mounting cavity 30 reaches a certain level or the temperature reaches the threshold, the pressure inside the mounting cavity 30 can be discharged from the double-Y-shaped scored grooves 41, thereby enabling rapid pressure relief of the battery cell 200.

In the above technical solution, the scored groove 41 includes one first straight groove segment 45 and four second straight groove segments 47, and the bottom wall of the third straight groove segment 48 is provided with the second weak segment 43, such that double-Y-shaped scored grooves 41 can be formed at two ends of the scored groove 41, and when the pressure in the mounting cavity 30 reaches a certain level or the temperature reaches the threshold, the pressure inside the mounting cavity 30 can be discharged from the double-Y-shaped scored grooves 41, thereby enabling rapid pressure relief of the battery cell 200.

According to some embodiments of the present application, as shown in FIG. 13, the scored groove 41 includes one first straight groove segment 45 and two third straight groove segments 48, two ends of the first straight groove segment 45 are respectively connected to the third straight groove segments 48, the third straight groove segment 48 is perpendicular to the first straight groove segment 45, and the bottom of each of the third straight groove segments 48 is provided with the second weak segment 43.

As shown in FIG. 13, the scored groove 41 includes one first straight groove segment 45 and two third straight groove segments 48. The first straight groove segment 45 extends in the second direction, and the two third straight groove segments 48 are disposed opposite to and spaced apart from each other in the second direction. Two ends of the first straight groove segment 45 are respectively connected to the third straight groove segments 48, and the third straight groove segments 48 are perpendicular or substantially perpendicular to the first straight groove segment 45. The scored groove 41 includes one first straight groove segment 45 and two third straight groove segments 48, such that the scored groove 41 can be configured as an "I"-shaped structure. The bottom wall of the third straight groove segment 48 is provided with the second weak segment 43. Therefore, when the pressure in the mounting cavity 30 reaches a certain level or the temperature reaches the threshold, the first straight groove segment 45 and the two third straight groove segments 48 can be torn open, and the pressure inside the mounting cavity 30 can be discharged from the first straight groove segment 45 and the third straight groove segments 48, thereby increasing the pressure relief speed of the battery cell 200.

In the above technical solution, the scored groove 41 includes one first straight groove segment 45 and two third straight groove segments 48, such that the scored groove 41 can be configured as an "I"-shaped structure. The bottom wall of the third straight groove segment 48 is provided with the second weak segment 43. Therefore, when the pressure in the mounting cavity 30 reaches a certain level or the temperature reaches the threshold, the first straight groove segment 45 and the two third straight groove segments 48 can be torn open, and the pressure inside the mounting cavity 30 can be discharged from the first straight groove segment 45 and the third straight groove segments 48, thereby increasing the pressure relief speed of the battery cell 200.

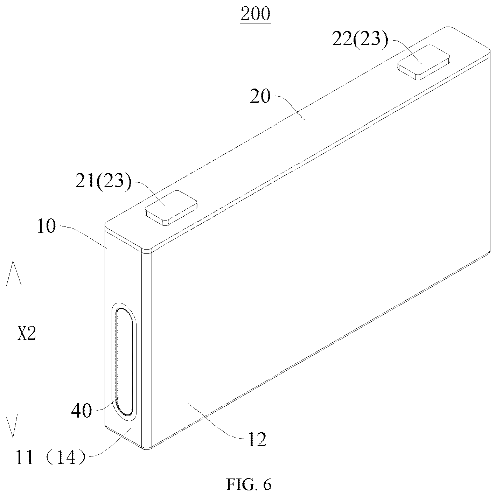

According to some embodiments of the present application, as shown in FIGs. 3 and 6, in the second direction, the center of the pressure relief part 40 and the center of the first wall part 11 are offset.

In the second direction, i.e., in the length direction of the first wall part 11, in the embodiments shown in FIG. 3, the second direction refers to the X1 direction in FIG. 3, and in the embodiments shown in FIG. 6, the second direction refers to the X2 direction in FIG. 6. In the second direction, the center of the pressure relief part 40 is offset from the center of the first wall part 11.

When the electrode assembly 300 expands, the electrode assembly 300 presses against the second wall part 12 to push the housing 60 outward, such that the housing 60 deforms, and the second wall part 12 is the main force-bearing surface and deforms greatly. When the second wall part 12 deforms, the deformation of the second wall part 12 pulls the first wall part 11, causing deformation of the first wall part 11. Since the middle position of the second wall part 12 deforms most severely, the middle position of the first wall part 11 is subjected to the maximum tensile force in the second direction, thereby subjecting the pressure relief part 40 to a tensile force. This easily leads to damage to the pressure relief part 40, affecting the normal operation of the pressure relief part 40.

In the present application, in the length direction of the first wall part 11, i.e., in the second direction, by arranging the center of the pressure relief part 40 offset from the center of the first wall part 11, the pressure relief part 40 can be eccentrically arranged on the first wall part 11 toward one side thereof, thereby increasing the distance between the center of the pressure relief part 40 and the center of the first wall part 11 in the second direction. When the electrode assembly 300 expands, causing deformation of the second wall part 12, the tensile force acting on the pressure relief part 40 can be reduced, the risk of tearing of the scored groove 41 of the pressure relief part 40 is mitigated, and thus the impact of the deformation of the housing 60 on the pressure relief part 40 is reduced, thereby reducing the risk of damage to the pressure relief part 40, which is conducive to maintaining the normal operation of the anti-explosion part.

In the above technical solution, since in the second direction, the center of the pressure relief part 40 and the center of the first wall part 11 are offset, the pressure relief part 40 is arranged deviated from the center of the first wall part 11. Therefore, when the battery cell 200 expands, causing deformation of the housing 60, the tensile force acting on the pressure relief part 40 can be reduced, and thus the impact of the deformation of the housing 60 on the scored groove 41 of the pressure relief part 40 is reduced, thereby reducing the risk of damage to the pressure relief part 40, which is conducive to maintaining the normal operation of the anti-explosion part.

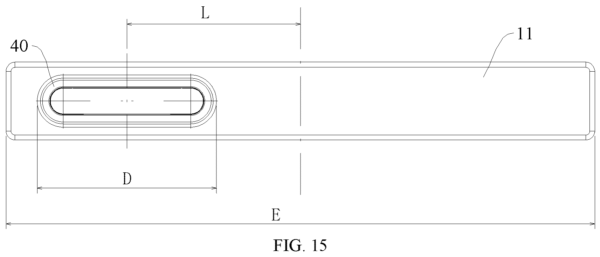

According to some embodiments of the present application, as shown in FIG. 15, in the second direction, the length of the pressure relief part 40 is D, the distance between the center of the pressure relief part 40 and the center of the first wall part 11 is L, and the length of the first wall part 11 is E, satisfying the relationship: D/2 < L < (E/2 - D/2) - 2.

As shown in FIG. 15, in the second direction, the length of the pressure relief part 40 is D mm, the distance between the center of the pressure relief part 40 and the center of the first wall part 11 is L mm, and the length of the first wall part 11 is E mm, satisfying the relationship: D/2 < L < (E/2 - D/2) - 2, that is, the distance between the center of the pressure relief part 40 and the center of the first wall part 11 is greater than half of the length of the pressure relief part 40, and the distance between the center of the pressure relief part 40 and the center of the first wall part 11 is less than the value obtained by subtracting 2 from the difference between half of the length of the first wall part 11 and half of the length of the pressure relief part 40.

In the above technical solution, by satisfying D/2 < L < (E/2 - D/2) - 2, the distance between the center of the pressure relief part 40 and the center of the first wall part 11 in the second direction is appropriate. When the electrode assembly expands, causing deformation of the second wall part 12 of the housing 60, on the basis of reducing the tensile force acting on the pressure relief part 40, the pressure relief part 40 can be smoothly opened to achieve a pressure relief effect, thereby reducing the explosion risk of the battery cell 200, and improving the use safety of the battery cell 200.

According to some embodiments of the present application, the pressure relief part 40 and the first wall part 11 are integrally formed; or
the pressure relief part 40 is disposed separately from the first wall part 11, the first wall part 11 is provided with a through hole 15, and the pressure relief part 40 is mounted in the through hole 15.

When the pressure relief part 40 and the first wall part 11 are integrally formed, the first wall part 11 may be provided with the scored groove 41, and a weakened zone is formed in the region of the first wall part 11 where the scored groove 41 is provided, thereby allowing the pressure relief part 40 to be formed by a simple manner with low production cost. In the above technical solution, since the pressure relief part 40 and the first wall part 11 are integrally formed, the pressure relief part 40 is formed by a simple manner, the number of components constituting the battery cell 200 can be reduced, the structure of the battery cell 200 can be simplified, and the manufacturing cost of the battery cell 200 can also be reduced.

Alternatively, as shown in FIGs. 3 and 7, the pressure relief part 40 is disposed separately from the first wall part 11, and the pressure relief part 40 and the housing 60 are two separate components, which are formed separately and then assembled together. Specifically, the pressure relief part 40 may be an anti-explosion sheet, an anti-explosion valve, a safety valve, or other components. The pressure relief part 40 may be mounted on the first wall part 11 by means of bonding, welding, etc. The first wall part 11 is provided with a through hole 15, and the pressure relief part 40 is mounted in the through hole 15. When the internal pressure or temperature of the battery cell 200 reaches the threshold, the pressure relief part 40 opens at least a part of the through hole 15, and the discharge medium inside the battery cell 200 is discharged through the through hole 15 to relieve the pressure inside the battery cell 200. In the above technical solution, by configuring the pressure relief part 40 and the first wall part 11 as separate components, it is convenient to arrange the pressure relief part 40 on the housing 60 with low manufacturing difficulty and high efficiency, thereby improving production efficiency of the battery cell 200.

Taking the pressure relief part 40 being an anti-explosion sheet as an example, the anti-explosion sheet is a sheet body having a strength in at least a partial region less than that of the first wall part 11, the anti-explosion sheet covers the through hole 15, and the anti-explosion sheet is welded to the first wall part 11. When the internal pressure or temperature of battery cell 200 reaches the threshold, at least a part of the anti-explosion sheet is damaged, thereby opening at least a part of the through hole 15 to release the pressure inside the battery cell 200.

According to some embodiments of the present application, as shown in FIGs. 3, 6, and 7, the housing 60 includes a housing body 10 and an end cover 20. At least one side of the housing body 10 has an opening, the end cover 20 is connected to the housing body 10 and is configured to seal the opening, and the first wall part 11 is formed on the housing body 10.

The housing body 10 may be of a hollow structure with an opening formed at one end, or the housing body 10 may be of a hollow structure with openings formed at two opposite ends. The housing body 10 may be in various shapes, such as a prismatic shape. The end cover 20 is a component that seals the opening of the housing body 10 to isolate the internal environment of the battery cell 200 from the external environment. The end cover 20 and the housing body 10 jointly define the mounting cavity 30 for accommodating the electrode assembly 300, the electrolyte, and other components. The shape of the end cover 20 may be adapted to the shape of the housing body 10. For example, the housing body 10 is of a rectangular parallelepiped structure, and the end cover 20 is of a rectangular plate-shaped structure adapted to the housing body 10. For another example, the housing body 10 is of a cylindrical structure, and the end cover 20 is of a circular plate-shaped structure adapted to the housing body 10. The end cover 20 may also be made of various materials, such as copper, iron, aluminum, steel, aluminum alloy, and plastic. The end cover 20 and the housing body 10 may be made of the same or different materials.

In an embodiment in which an opening is formed at one end of the housing body 10, one end cover 20 may be correspondingly provided. In an embodiment in which openings are respectively formed at two opposite ends of the housing body 10, two end covers 20 may be correspondingly provided. The two end covers 20 respectively seal the two openings of the housing body 10, and the two end covers 20 and the housing body 10 jointly define the mounting cavity 30.

The housing body 10 is provided with a first wall part 11 and a second wall part 12, and the first wall part 11 is formed on the housing body 10. The pressure relief part 40 may be integrally formed with the housing body 10 or may be disposed separately from the housing body 10. By disposing the pressure relief part 40 on the housing body 10, the structure of the end cover 20 can be simplified, and the distance between the pressure relief part 40 and the body of the electrode assembly 300 can be shortened, thereby shortening the path for the discharge medium to flow to the pressure relief part 40 during pressure relief, reducing time for the discharge medium to reach the pressure relief part 40, improving the response speed of pressure relief of the battery cell 200, and thus effectively enhancing the reliability of the battery cell 200.

In the above technical solution, by forming the first wall part 11 on the housing body 10, the structure of the end cover 20 can be simplified, and the distance between the pressure relief part 40 and the body of the electrode assembly 300 can be shortened, thereby shortening the path for the discharge medium to flow to the pressure relief part 40 during pressure relief, reducing time for the discharge medium to reach the pressure relief part 40, improving the response speed of pressure relief of the battery cell 200, and thus effectively enhancing the reliability of the battery cell 200.

According to some embodiments of the present application, as shown in FIG. 14, two opposite sides of the housing body 10 each have an opening, and two end covers 20 are configured to seal the openings on the corresponding sides.

As shown in FIG. 14, in an embodiment in which openings are respectively formed at two opposite ends of the housing body 10, two end covers 20 may be correspondingly provided. The two end covers 20 respectively seal the two openings of the housing body 10, and the two end covers 20 and the housing body 10 jointly define the mounting cavity 30.

In the above technical solution, two opposite sides of the housing body 10 each have an opening, and two end covers 20 are configured to seal the openings on the corresponding sides, such that a mounting cavity 30 can be jointly defined, and the manufacturing and formation of the housing body 10 can be facilitated, and it is also convenient for tabs to be led out from both ends of the electrode assembly 300, thereby facilitating the separation of the two electrical connection parts 23, and reducing the risk of short circuits of the battery cell 200.

According to some embodiments of the present application, as shown in FIG. 14, the end cover 20 is provided with an electrical connection part 23. The electrical connection part 23 is electrically connected to the positive electrode plate, or the electrical connection part 23 is electrically connected to the negative electrode plate.

The electrical connection part 23 is disposed on the end cover 20. The electrical connection part 23 may be a part of the end cover 20, and the electrical connection part 23 may also be a post terminal mounted on the end cover 20. Generally, two electrical connection parts 23 are provided. One electrical connection part 30 serves as the positive electrode post terminal 21 and is electrically connected to the tab of the positive electrode plate, and the other electrical connection part 30 serves as the negative electrode post terminal 22 and is electrically connected to the tab of the negative electrode plate, so as to input or output electrical energy of the battery cell 200. The electrical connection part 23 may be directly connected to the tab. For example, the electrical connection part 23 is directly welded to the tab. The electrical connection part 23 may also be indirectly connected to the tab. For example, the electrical connection part 23 is indirectly connected to the tab through a current collecting member. The current collecting member may be a metal conductor, such as copper, iron, aluminum, steel, or an aluminum alloy.

The electrical connection part 23 and the pressure relief part 40 are located on different sides of the housing 10, that is, the electrical connection part 23 is located on one wall part of the housing 60, and the pressure relief part 40 is located on another wall part of the housing 60. Since the electrical connection part 23 is connected to the tab of the electrode assembly 300, and there is a certain gap between the wall part where the electrical connection part 23 is located and the body of the electrode assembly 300, by disposing the electrical connection part 23 and the pressure relief part 40 on different wall parts of the housing 60, the distance between the pressure relief part 40 and the body of the electrode assembly 300 can be shortened. Thus, when the battery cell 200 undergoes thermal runaway, most of the discharge medium in the housing 60 can directly flow from the edge of the body of the electrode assembly 300 to the pressure relief part 40, thereby shortening the path for the discharge medium to flow to the pressure relief part 40, and enabling the discharge medium to rapidly flow to the pressure relief part 40. As a result, the time for the discharge medium to reach the pressure relief part 40 is shortened, the response speed of pressure relief of the battery cell 200 is improved, and thus the reliability of the battery cell 200 is effectively enhanced.

In the above technical solution, the electrical connection part 23 is electrically connected to the positive electrode plate, or the electrical connection part 23 is electrically connected to the negative electrode plate, such that electrical energy of the battery cell 200 can be input or output.

According to some embodiments of the present application, as shown in FIGs. 3, 4, and 7, the first wall part 11 is configured to support the electrode assembly 300 and is disposed below the electrode assembly 300.

The housing body 10 has a bottom housing wall 13 opposite to and spaced apart from the end cover 20. The bottom housing wall 13 is configured as the first wall part 11, and the first wall part 11 can support the electrode assembly 300.

In the above technical solution, the electrode assembly 300 is supported by the first wall part 11, such that the electrode assembly 300 can be firmly mounted in the mounting cavity 30 of the housing 60.

According to some embodiments of the present application, the material of the housing 60 includes at least one of aluminum, nickel-plated carbon steel, stainless steel, a magnesium alloy, a nickel alloy, a copper alloy, and a zirconium alloy.

The material of the housing body 10 of the housing 60 may be nickel-plated carbon steel, such as SPCC; the material of the housing body 10 may also be stainless steel, such as SUS304 and SUS316; the material of the housing body 10 may also be a magnesium alloy, such as AZ31B; the material of the housing body 10 may also be a nickel alloy, such as Inconcel625; the material of the housing body 10 may also be a copper alloy, such as brass; the material of the housing body 10 may also be a zirconium alloy, such as Zr702. Certainly, the material of the housing body 10 may also be a composite material. By using the materials described above, the tensile strength of the wall parts of the housing body 10 can be enhanced, thereby reducing the deformation of the housing body 10 when the electrode assembly 300 expands, reducing the probability of breaking the housing body 10 or the pressure relief part 40 due to pulling, reducing the risk of liquid leakage, and enhancing the reliability of the battery cell 200. The end cover 20 and the housing body 10 may be made of the same material, or may be made of different materials. The material of the housing 60 includes at least one of aluminum, nickel-plated carbon steel, stainless steel, a magnesium alloy, a nickel alloy, a copper alloy, and a zirconium alloy, such that the structural strength of the housing 60 can be enhanced, and the manufacturing cost of the housing 60 can also be reduced.

According to some embodiments of the present application, the positive electrode plate includes a positive electrode current collector and a positive electrode active substance zone disposed on the surface of the positive electrode current collector. The constituent material of the positive electrode current collector includes an aluminum element with a mass percentage greater than or equal to 50%.

That is, the constituent material of the positive electrode current collector may include the aluminum element, and the mass percentage of the aluminum element in the positive electrode current collector is greater than or equal to 50%. Compared to using a composite current collector in the prior art, the use of the positive electrode current collector described above can reduce the difficulty in manufacturing the positive electrode plate and reduce the manufacturing cost as well.

According to some embodiments of the present application, the tensile strength of the first wall part 11 is not less than 400 MPa.

The tensile strength of the first wall part 11 may be 400 MPa or greater than 400 MPa, such as, 500 MPa, 600 MPa, or 700 MPa. The tensile strength of the second wall part 12 may be 400 MPa or greater than 400 MPa, such as, any one of point values 500 MPa, 600 MPa, and 700 MPa or a range value defined by any two of the point values. By defining the tensile strength of the wall parts of the housing body 10, the tensile strength of the housing body 10 is enhanced, and the deformation of the housing body 10 when the electrode assembly 300 expands is reduced, thereby reducing the pulling on the surface where the pressure relief part 40 is located, lowering the probability of breaking the housing body 10 or the pressure relief part 40 due to pulling, reducing the risk of liquid leakage, and enhancing the reliability of the battery cell 200.

As shown in FIGs. 3 and 7, the housing 60 includes a housing body 10 and an end cover 20. The housing body 10 may be a metal housing. For example, the housing body 10 may be made of aluminum. The end cover 20 may be provided with a positive electrode post terminal 21 and a negative electrode post terminal 22. The housing body 10 may define a mounting groove with one end open. The end cover 20 is fixedly connected to the housing body 10, and the end cover 20 lids the opening of the mounting groove, such that the housing body 10 and the end cover 20 jointly define the mounting cavity 30. The electrode assembly 300 of the battery cell 200 is mounted in the mounting cavity 30. The housing body 10 has a first wall part 11 and a second wall part 12 adjacent to each other. The housing body 10 has a bottom housing wall 13, the bottom housing wall 13 is arranged opposite to the end cover 20, and the bottom housing wall 13 is spaced apart from the end cover 20. The bottom housing wall 13 is arranged adjacent to the second wall part 12, and the area of the bottom housing wall 13 is smaller than the area of the second wall part 12. The bottom housing wall 13 is a narrow-surface housing wall of the housing body 10. The bottom housing wall 13 is configured as the first wall part 11. The pressure relief part 40 is disposed on the bottom housing wall 13.

In the above technical solution, by disposing the pressure relief part 40 on the bottom housing wall 13, the effect of pressure relief of the battery cell 200 toward the bottom can be achieved, and the risk of injuring surrounding personnel by the high-temperature and high-pressure substance ejected from the battery cell 200 can be reduced.

According to some embodiments of the present application, as shown in FIG. 6, the housing 60 includes a housing body 10 and an end cover 20. The housing body 10 and the end cover 20 are connected and jointly define the mounting cavity 30. The housing body 10 has a side housing wall 14 adjacent to the end cover 20. The side housing wall 14 is configured as the first wall part 11.

As shown in FIG. 6, the housing 60 includes a housing body 10 and an end cover 20. The housing body 10 may be a metal housing. For example, the housing body 10 may be made of aluminum. The end cover 20 may be provided with a positive electrode post terminal 21 and a negative electrode post terminal 22. The housing body 10 may define a mounting groove with one end open. The end cover 20 is fixedly connected to the housing body 10, and the end cover 20 lids the opening of the mounting groove, such that the housing body 10 and the end cover 20 jointly define the mounting cavity 30. The electrode assembly 300 of the battery cell 200 is mounted in the mounting cavity 30. The housing body 10 has a first wall part 11 and a second wall part 12 adjacent to each other. The housing body 10 has a side housing wall 14, the side housing wall 14 is arranged adjacent to the end cover 20, and the side housing wall 14 is also arranged adjacent to the second wall part 12. The area of the side housing wall 14 is smaller than the area of the second wall part 12. The housing side wall 14 is a narrow-surface housing wall of the housing body 10, and the side housing wall 14 is configured as the first wall part 11. The pressure relief part 40 is arranged on the side housing wall 14.

In the above technical solution, by disposing the pressure relief part 40 on the side housing wall 14, the effect of lateral pressure relief of the battery cell 200 can be achieved. During the pressure relief of the battery cell 200, high-temperature and high-pressure substances in the battery cell 200 can be rapidly discharged out of the battery cell 200.

According to some embodiments of the present application, the present application further provides a battery 400, including the battery cell 200 according to the above embodiments.

According to some embodiments of the present application, the present application further provides an electric device 500, including the battery 400 in the above embodiments.

According to some embodiments of the present application, referring to FIG. 11, the present application provides a battery cell 200. The battery cell 200 includes a housing 60 and an electrode assembly 300. The housing 60 includes a housing body 10 and an end cover 20. The housing body 10 is connected to the end cover 20, and the housing body 10 and the end cover 20 jointly define a mounting cavity 30. The electrode assembly 300 is mounted in the mounting cavity 30, and the second wall part 12 of the housing body 10 is opposite to the flat region 301 of the electrode assembly 300. The bottom housing wall 13 of the housing body 10 is configured as the first wall part 11. The pressure relief part 40 is disposed on the bottom housing wall 13 of the housing body 10, and the pressure relief part 40 includes a weak part 491 and a body part 492. The body part 492 is connected between the weak part 491 and the first wall part 11, and the body part 492 includes a first body part 493 and a second body part 494 that are connected to each other. The second body part 494 is connected between the weak part 491 and the first body part 493, and the first body part 493 is connected to the first wall part 11. The scored groove 41 is formed in the pressure relief part 40, and the bottom of the scored groove 41 is provided with the weak part 491. The thickness of the first wall part 11 is greater than the thickness of the first body part 493. The thickness of the first body part 493 is greater than the thickness of the second body part 494. The thickness of the second body part 494 is greater than the thickness of the weak part 491.

It should be noted that in the absence of conflicts, the embodiments and features in the embodiments in the present application may be combined with each other.

According to some embodiments of the present application, 1 mm ≤ D1 ≤ 2 mm. For example, D1 is 1 mm, 1.5 mm, 2 mm, etc. 0.1 mm ≤ D2 ≤ 0.2 mm, and for example, D2 is 0.1 mm, 0.18 mm, 0.2 mm, etc. 0.1 mm ≤ D3 ≤ 0.2 mm, and for example, D3 is 0.1 mm, 0.135 mm, 0.2 mm, etc. 0.4 mm ≤ D4 ≤ 0.6 mm, and for example, D4 is 0.4 mm, 0.5 mm, 0.6 mm, etc.

The battery cell 200 of the first embodiment differs from the battery cell 200 of the second embodiment in that: the pressure relief part 40 of the battery cell 200 of the first embodiment is eccentrically arranged, and the pressure relief part 40 of the battery cell 200 of the second embodiment is disposed at a middle position of the bottom housing wall 13 (i.e., the first wall part 11). The battery cell 200 of the first embodiment differs from the battery cell 200 of the third embodiment in that: the pressure relief part 40 of the battery cell 200 of the third embodiment is disposed on the side housing wall 14. The battery cell 200 of the fourth embodiment differs from the battery cell 200 of the third embodiment in that: the two electrical connection parts 23 of the battery cell 200 of the fourth embodiment are disposed on the two opposite housing walls of the housing 60, and the pressure relief part 40 is disposed at a middle position of the side housing wall 14 (i.e., the first wall part 11).

The difference between the pressure relief part 40 of the first embodiment, the pressure relief part 40 of the second embodiment, and the pressure relief part 40 of the third embodiment is that: the scored groove 41 of the pressure relief part 40 of the first embodiment is annular, the pressure relief part 40 of the second embodiment is of a double-Y-shaped structure, and the pressure relief part 40 of the third embodiment is of an "I"-shaped structure.

In the description of this specification, the description of reference terms "one embodiment", "some embodiments", "a schematic embodiment", "an example", "a specific example", or "some examples" and the like means that a particular feature, structure, material, or characteristic described in connection with the embodiments or examples is included in at least one embodiment or example of the present application. In the specification, the schematic description of the aforementioned terms does not necessarily refer to the same embodiment or example. Moreover, the specific feature, structure, material, or characteristic described may be combined in a suitable manner in any one or more embodiments or examples.

Although the embodiments of the present application have been illustrated and described, it will be appreciated by those of ordinary skill in the art that various changes, modifications, replacements, and variations can be made to these embodiments without departing from the principle and purpose of the present application, and the scope of the present application is defined by the claims and equivalents thereof.

## Claims

1. A battery cell, comprising:
an electrode assembly, comprising a positive electrode plate and a negative electrode plate, wherein the positive electrode plate and the negative electrode plate are stacked to form a flat region, and at least a part of the positive electrode plate and at least a part of the negative electrode plate are stacked in the flat region in a first direction;
a housing, configured to accommodate the electrode assembly, wherein the housing comprises a first wall part and two second wall parts connected to the first wall part, and the two second wall parts are respectively located on two sides of the flat region in the first direction;
a pressure relief part, wherein:
the pressure relief part is disposed on the first wall part, the pressure relief part comprises a weak part and a body part, and the body part is disposed between the weak part and the first wall part; and
a maximum thickness of the first wall part is D1, a minimum thickness of the body part is D2, a maximum thickness of the weak part is D3, and D3 < D2 < D1.

2. The battery cell according to claim 1, wherein D1 - D2 > D2 - D3.

3. The battery cell according to claim 1 or 2, wherein D3 ≤ 0.2 × D1.

4. The battery cell according to any one of claims 1 to 3, wherein:
the body part comprises a first body part and a second body part that are connected to each other, the first body part is connected to the first wall part, the second body part is connected between the weak part and the first body part, the first body part is arranged around the second body part, and the second body part is arranged around the weak part; and
a thickness of the first body part is D4, a thickness of the second body part is D2, and D2 < D4 < D1.

5. The battery cell according to claim 4, wherein D1 - D4 > D4 - D2 > D2 - D3.

6. The battery cell according to any one of claims 1 to 5, wherein:
a scored groove is formed in the pressure relief part, and a bottom of the scored groove is provided with the weak part; and
the weak part comprises a first weak segment and a second weak segment, a thickness of the second weak segment is less than a thickness of the first weak segment, the first weak segment is a straight line segment extending in a second direction, and the second direction is perpendicular to the first direction.

7. The battery cell according to claim 6, wherein the pressure relief part is configured to initiate cracking at the second weak segment when an internal pressure or temperature of the housing reaches a threshold.

8. The battery cell according to claim 6 or 7, wherein the scored groove comprises a first straight groove segment extending in the second direction, and a bottom of the first straight groove segment is provided with the first weak segment.

9. The battery cell according to claim 8, wherein a length of the first weak segment is less than a length of the first straight groove segment.

10. The battery cell according to claim 9, wherein a ratio of the length of the first weak segment to the length of the first straight groove segment is greater than or equal to 0.5 and less than or equal to 0.9.

11. The battery cell according to any one of claims 8 to 10, wherein in the second direction, the first weak segment is disposed at a middle position of the first straight groove segment.

12. The battery cell according to claim 11, wherein the first weak segment is symmetrical about a central cross section of the first straight groove segment, and the central cross section is perpendicular to the second direction.

13. The battery cell according to any one of claims 6 to 12, wherein in a depth direction of the scored groove, a difference between a thickness of the second weak segment and a thickness of the first weak segment is greater than 0.05 mm and less than or equal to 0.45 mm.

14. The battery cell according to any one of claims 6 to 13, wherein the scored groove comprises two first straight groove segments extending in the second direction, and a bottom of each of the first straight groove segments is provided with the first weak segment.

15. The battery cell according to claim 14, wherein the two first weak segments comprise a first segment and a second segment, a thickness of the first segment is less than a thickness of the second segment, and the pressure relief part is configured such that when the internal pressure or temperature of the housing reaches the threshold, the first segment completely cracks and at least a part of the second segment does not crack.

16. The battery cell according to claim 15, wherein lengths of the two first weak segments are equal.

17. The battery cell according to claim 15 or 16, wherein the scored groove comprises two first arc-shaped groove segments, two ends of each of the first straight groove segments are respectively connected to the two first arc-shaped groove segments to configure the scored groove as an annular shape, and a bottom of each of the first arc-shaped groove segments is provided with the second weak segment.

18. The battery cell according to any one of claims 6 to 13, wherein the scored groove comprises one first straight groove segment extending in the second direction, and a bottom of the first straight groove segment is provided with the first weak segment.

19. The battery cell according to claim 18, wherein:
the scored groove comprises one first straight groove segment and four second straight groove segments, two ends of the first straight groove segment are respectively connected to two second straight groove segments disposed at a preset included angle, and a bottom of each of the second straight groove segments is provided with the second weak segment; or
the scored groove comprises one first straight groove segment and two third straight groove segments, two ends of the first straight groove segment are respectively connected to the third straight groove segments, the third straight groove segment is perpendicular to the first straight groove segment, and a bottom of each of the third straight groove segments is provided with the second weak segment.

20. The battery cell according to any one of claims 1 to 19, wherein in the second direction, a center of the pressure relief part and a center of the first wall part are offset.

21. The battery cell according to any one of claims 1 to 20, wherein:
the pressure relief part and the first wall part are integrally formed; or
the pressure relief part is disposed separately from the first wall part, the first wall part is provided with a through hole, and the pressure relief part is mounted in the through hole.

22. The battery cell according to any one of claims 1 to 21, wherein the housing comprises a housing body and an end cover, at least one side of the housing body has an opening, the end cover is connected to the housing body and is configured to seal the opening, and the first wall part is formed on the housing body.

23. The battery cell according to claim 22, wherein two opposite sides of the housing body each have an opening, and two end covers are configured to seal the openings on the corresponding sides.

24. The battery cell according to claim 22 or 23, wherein the end cover is provided with an electrical connection part, the electrical connection part being electrically connected to the positive electrode plate, or the electrical connection part being electrically connected to the negative electrode plate.

25. The battery cell according to any one of claims 22 to 24, wherein the first wall part is configured to support the electrode assembly and is disposed below the electrode assembly.

26. The battery cell according to any one of claims 1 to 25, wherein a material of the housing comprises at least one of aluminum, nickel-plated carbon steel, stainless steel, a magnesium alloy, a nickel alloy, a copper alloy, and a zirconium alloy.

27. A battery, comprising the battery cell according to any one of claims 1 to 26.

28. An electric device, comprising the battery according to claim 27.
